(19) Europäisches Patentamt / European Patent Office / Office européen des brevets

(11) **EP 4 611 450 A1**

(12) **EUROPEAN PATENT APPLICATION**
published in accordance with Art. 153(4) EPC

(43) Date of publication:
**03.09.2025   Bulletin 2025/36**

(21) Application number: **23883179.6**

(22) Date of filing: **27.10.2023**

(51) International Patent Classification (IPC):
*H04W 72/02* (2009.01)          *H04W 72/20* (2023.01)
*H04W 74/08* (2024.01)          *H04W 16/14* (2009.01)
*H04W 24/08* (2009.01)          *H04W 76/28* (2018.01)
*H04L 1/18* (2023.01)           *H04W 52/02* (2009.01)

(52) Cooperative Patent Classification (CPC):
H04L 1/18; H04W 16/14; H04W 24/08;
H04W 52/02; H04W 72/02; H04W 72/20;
H04W 74/08; H04W 76/28

(86) International application number:
**PCT/KR2023/016915**

(87) International publication number:
**WO 2024/091075 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022   KR 20220140996**

(71) Applicant: **Innovative Technology Lab Co., Ltd.**
**Seocho-gu, Seoul 06744 (KR)**

(72) Inventors:
• **LEE, Won Seok**
  **Seoul 06744 (KR)**
• **PARK, Dong Hyun**
  **Seoul 06744 (KR)**

(74) Representative: **Diehl & Partner**
**Patent- und Rechtsanwaltskanzlei mbB**
**Erika-Mann-Straße 9**
**80636 München (DE)**

(54) **METHOD AND DEVICE FOR PERFORMING SIDELINK COMMUNICATION IN UNLICENSED BAND**

(57)    A wireless user equipment, UE, in a wireless communication system may be configured with at least one hybrid automatic repeat and request, HARQ feedback transmission opportunity, may transmit HARQ feedback based on the configured at least one HARQ feedback transmission opportunity, may operate a sidelink discontinuous reception, DRX, HARQ round trip time, RTT, timer based on the HARQ feedback transmission, and may receive a retransmission grant if the sidelink DRX HARQ RTT timer expires.

**FIG. 17**

**Description**

TECHNICAL FIELD

The present disclosure relates to a method and apparatus for performing sidelink communication in an unlicensed band in a wireless communication system. More particularly, the present disclosure relates to a method and apparatus for operating a hybrid automatic repeat and request (HARQ) timer in the sidelink unlicensed band (SL-U).

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to a long term evolution (LTE)-based/New Radio (NR) based communication between vehicles, vehicle-to-pedestrian (V2P), which may refer to LTE-based/NR-based communication between a vehicle and a user equipment (UE) carried by a user, and a vehicle-to-infrastructure/network (V2I/N), which may refer to a LTE-based/NR-based communication between a vehicle and a roadside unit (RSU)/network. The RSU may be a transportation infrastructure entity configured by a base station or a fixed UE, such as, an entity that transmits a speed notification to a vehicle.

DETAILED DESCRIPTION

TECHNICAL SUBJECT

A technical subject of the present disclosure relates to a method and apparatus for performing sidelink (SL) communication in a wireless communication system.

A technical subject of the present disclosure relates to a method and apparatus for operating a hybrid automatic repeat and request (HARQ) timer in the sidelink unlicensed band (SL-U).

A technical subject of the present disclosure relates to a method and apparatus for operating a HARQ timer based on a physical sidelink feedback channel (PSFCH) transmission opportunity in the SL-U.

Technical subjects to be achieved by the present disclosure are not limited to the aforementioned technical subjects, and still other technical subjects not described may be clearly understood by one of ordinary skill in the art to which the present disclosure pertains from the following description.

TECHNICAL SOLUTION

According to an aspect of the present disclosure, there is provided a wireless user equipment (UE) that operates in a sidelink unlicensed band in a wireless communication system, the wireless UE including at least one antenna configured to transmit and receive one or more wireless signals; at least one processor; and a memory configured to store instructions for the wireless UE when executed by the at least one processor, wherein the wireless UE is configured to be configured with at least one hybrid automatic repeat and request (HARQ) feedback transmission opportunity, to transmit HARQ feedback based on the configured at least one HARQ feedback transmission opportunity, to operate a sidelink discontinuous reception (DRX) HARQ round trip time (RTT) timer based on the HARQ feedback transmission, and to receive a retransmission grant if the sidelink DRX HARQ RTT timer expires.

According to an aspect of the present disclosure, if the sidelink DRX HARQ RTT timer expires and data of a sidelink process is not successfully decoded or HARQ feedback information is NACK, the wireless UE may be configured to receive the retransmission grant based on a sidelink DRX HARQ retransmission timer.

According to an aspect of the present disclosure, the at least one HARQ feedback transmission opportunity may be configured to be plural based on at least one of semi-static physical sidelink feedback channel (PSFCH) configuration and dynamic PSFCH resource indication.

According to an aspect of the present disclosure, the sidelink DRX HARQ RTT timer may operate based on a HARQ feedback transmission opportunity that succeeds in a HARQ feedback transmission among the multiple HARQ feedback transmission opportunities.

According to an aspect of the present disclosure, the sidelink DRX HARQ RTT timer may operate based on a specific HARQ feedback transmission opportunity among the multiple HARQ feedback transmission opportunities.

According to an aspect of the present disclosure, the at least one HARQ feedback transmission opportunity may be configured as one.

According to an aspect of the present disclosure, the one HARQ feedback transmission opportunity may be indicated as a resource for HARQ feedback within a physical sidelink shared channel (PSSCH).

According to an aspect of the present disclosure, the sidelink DRX HARQ RTT timer may operate based on the resource for the HARQ feedback within the PSSCH.

EFFECT

According to the present disclosure, it is possible to provide a method of performing sidelink (SL) communication in a wireless communication system.

According to the present disclosure, it is possible to provide a method of operating a hybrid automatic repeat and request (HARQ) timer in the sidelink unlicensed band (SL-U).

According to the present disclosure, it is possible to provide a method of operating a HARQ timer based on a physical sidelink feedback channel (PSFCH) transmission opportunity in the SL-U.

Effects that may be achieved by the present disclosure are not limited to the aforementioned effects, and still other effects not described may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.
FIG. 2 illustrates an NR resource structure to which the present disclosure may apply.
FIG. 3 illustrates an NR sidelink slot structure to which the present disclosure may apply.
FIG. 4 illustrates an NR sidelink frequency to which the present disclosure may apply.
FIG. 5 illustrates an NR sidelink resource pool configuration to which the present disclosure may apply.
FIG. 6 illustrates an unlicensed band for each region for NR sidelink communication to which the present disclosure may apply.
FIG. 7 illustrates use of a 5 gigahertz (GHz) unlicensed band to which the present disclosure may apply.
FIG. 8 illustrates a method of increasing a bandwidth in consideration of a power spectral density (PSD) limitation to which the present disclosure may apply.
FIG. 9 illustrates a method of configuring a guard band in consideration of a shared band within an intra-cell to which the present disclosure may apply.
FIG. 10 illustrates an unlicensed band applicable to the present disclosure.
FIG. 11 illustrates a sidelink resource pool to which the present disclosure may apply.
FIG. 12 illustrates a sidelink discontinuous reception (DRX) hybrid automatic repeat and request (HARQ) round trip time (RTT) timer, applied to the present disclosure.
FIG. 13 illustrates a method of operating a sidelink timer in a resource pool in which a physical sidelink feedback channel (PSFCH) is not configured, applied to the present disclosure.
FIG. 14 illustrates a sidelink HARQ feedback operation, applied to the present disclosure.
FIG. 15 illustrates PSSCH-PSFCH mapping for HARQ feedback transmission, applied to the present disclosure.
FIG. 16 illustrates a channel occupancy time (COT) structure applied to the present disclosure.
FIG. 17 illustrates a method of configuring a plurality of PSFCH transmission opportunities and a method of configuring a sidelink DRX timer based on this, applied to the present disclosure.
FIG. 18 illustrates a method of configuring multiple HARQ feedback transmission opportunities through a semi-statically configured PSFCH configuration and, based on this, performing a sidelink DRX timer operation, applied to the present disclosure.
FIG. 19 illustrates a method of configuring multiple HARQ feedback transmission opportunities with a semi-statically configured PSFCH occasion and dedicated PSFCH resource and, based on this, operating a sidelink DRX timer, applied to the present disclosure.

FIG. 20 illustrates a dedicated PSSCH resource for HARQ feedback in consideration of a single HARQ feedback transmission opportunity, applied to the present disclosure.

FIG. 21 illustrates a HARQ feedback transmission opportunity bundling operation to which the present disclosure applies.

FIG. 22 is a flowchart illustrating an operation of a wireless UE to which the present disclosure may apply.

FIG. 23 is a diagram illustrating a base station and a terminal device to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

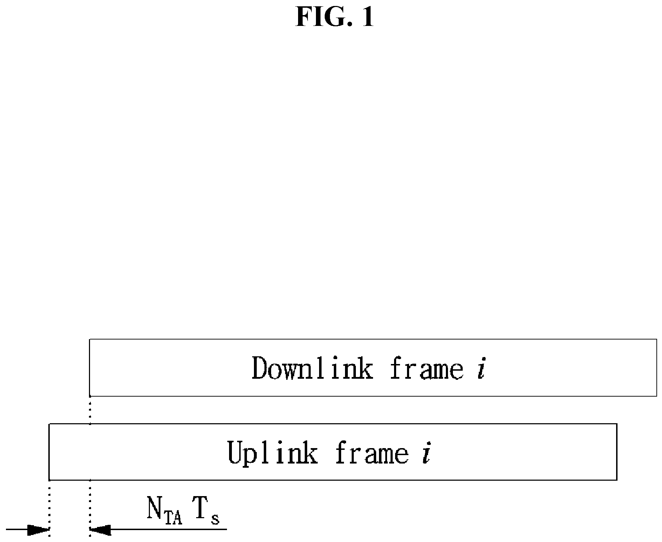

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max} N_f/100) \cdot T_s = 10ms$. Here, a single frame may include 10 subframes corresponding to $T_{sf} = (\Delta f_{max} N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = (N_{TA} + N_{TA,offset})T_c$$

The $N_{TA,offset}$ denotes a TA offset value occurring due to a duplex mode difference and the like. Basically, in a frequency division duplex (FDD), $N_{TA,offset} = 0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be $39936T_C$ or $2600T_C$. $39936T_C = 20.327\mu s$ and $25600T_C = 13.030\mu s$. Also, in FR2 (Frequency Range 2) which is millimeter wave (mmWave), the $N_{TA,offset}$ may be $13792T_C$. At this time, $39936T_C = 7.020 \mu s$.

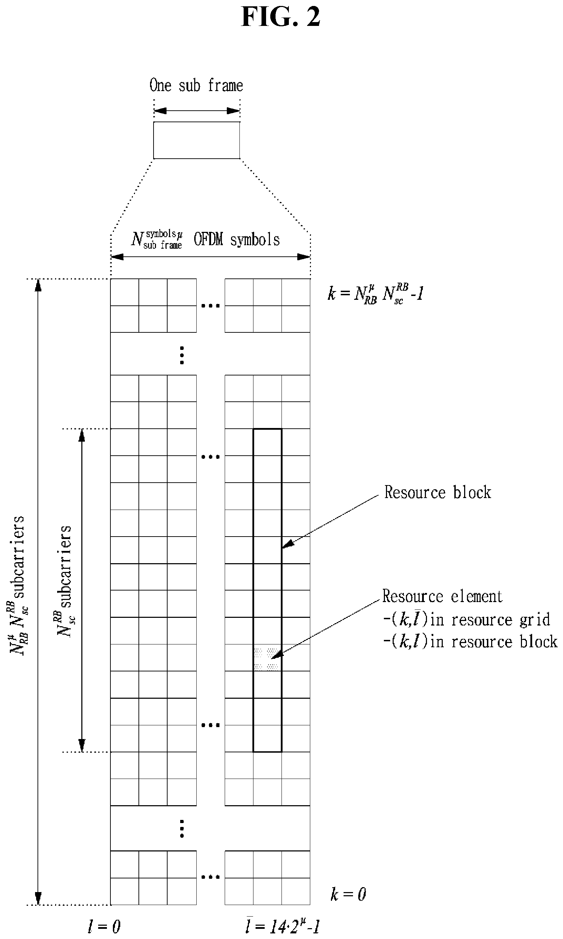

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}_{sc}$ represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu = 2$ and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu = 1$ and 2 may be used in the unlicensed band of 6 GHz or less and an SCS corresponding to $\mu = 3$ and 4 may be used in the unlicensed band above 6 GHz. Here, for example, if $\mu = 4$, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu = 2$ and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| **Vehicles Platooning** |
|---|
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor** |
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |

(continued)

| Advanced Driving |
| --- |
| Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |

| Remote Driving |
| --- |
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

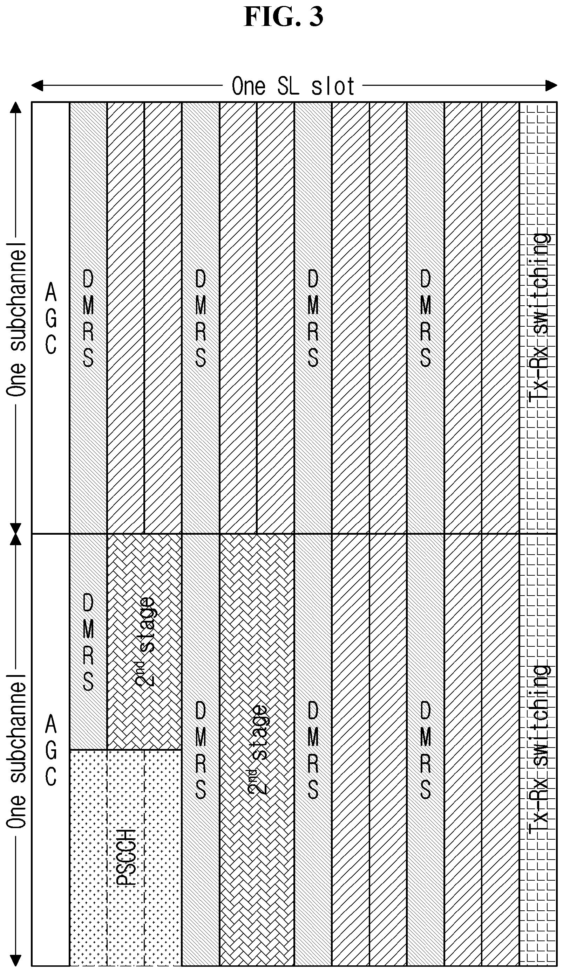

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

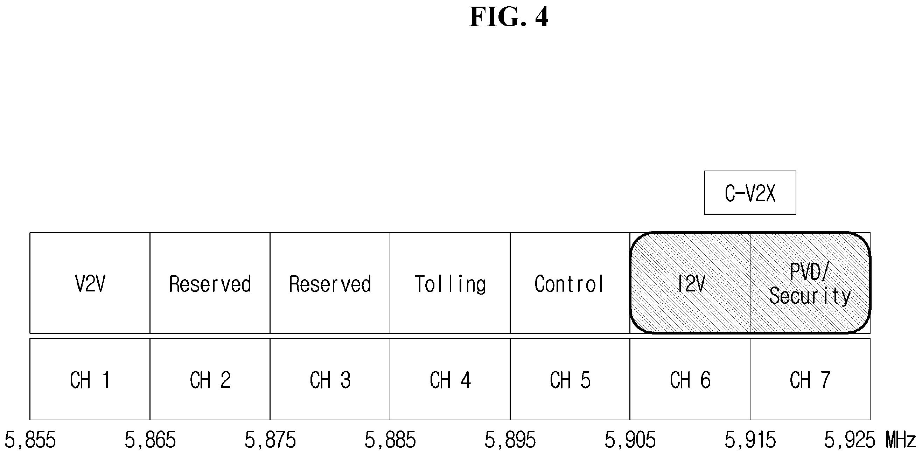

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
| --- |
| - Delay:[3, 100ms] <br> - Reliability :[90%, 99.999%] <br> - Data rate: up to 1Gbps (TS22.186) |

[Table 7] ]

| PQI Value | Resource Type | Default Priority Level | Packet Delay Budget | Packet Error Rate | Default Maximum Data Burst Volume | Default Averaging Window | Example Services |
| --- | --- | --- | --- | --- | --- | --- | --- |
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |

(continued)

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |
| •NOTE 1: GBR and Delay Critical GBR PQIs can only be used for unicast PC5 communications. Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

|  | FR 1 | FR2 |
|---|---|---|
| PSSCH/PSCCH and PSFCH | - Normal CP for 15 kHz, 30 kHz, 60 kHz<br>- Extended CP for 60 kHz | - Normal CP for 60 kHz, 120 kHz,<br>- Extended CP for 60 kHz |
| note | No support of DFT-S-OFDM for NR SL in Rel-16 | |

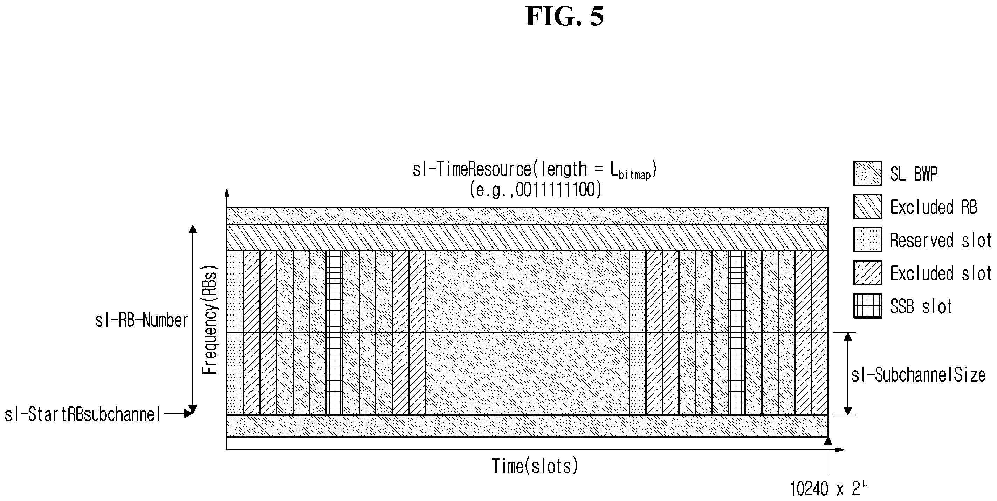

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

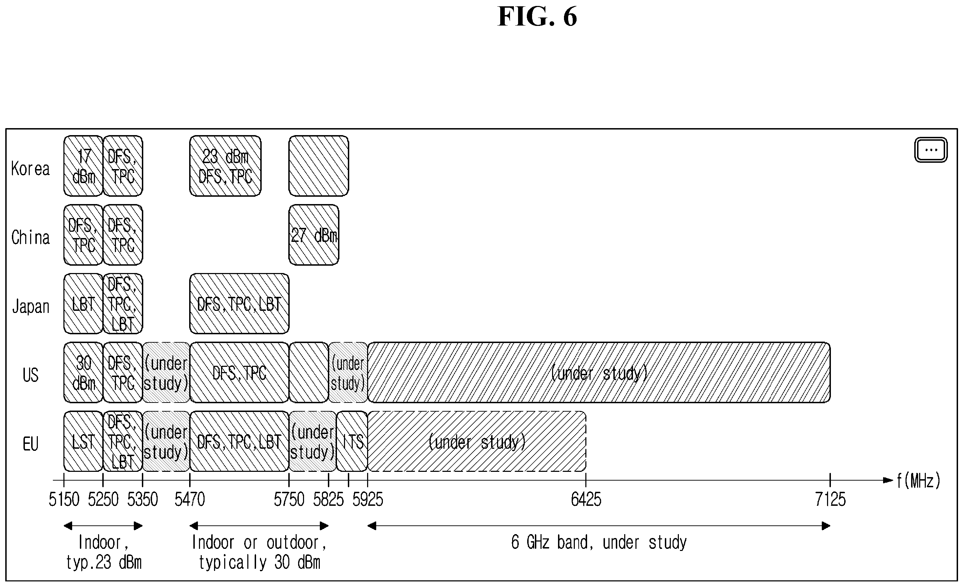

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 3550-3700 MHz) may be defined as a citizens broadband radio service (CBRS), but may not be limited thereto.

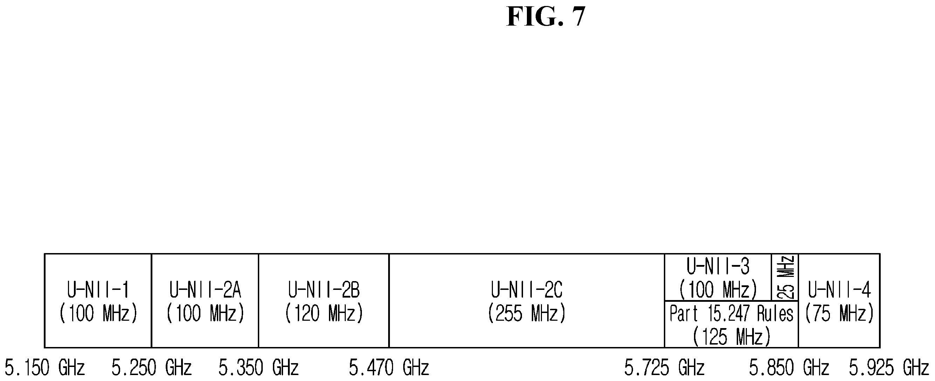

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

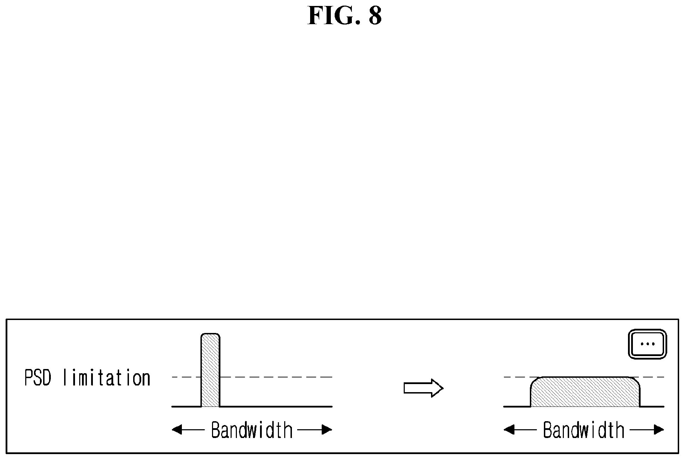

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

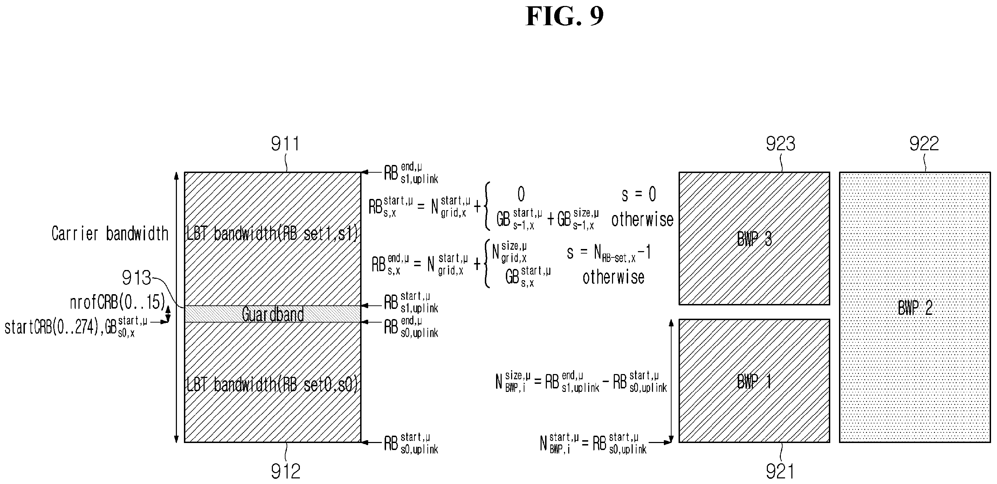

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{RB-set,x}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0, 1, ..., N_{\text{RB-set},x} - 2\}$, $N_{\text{RB-set},x}$ denotes the number of RB sets, and x may be configured as DL or UL for downlink and uplink. $N_{\text{RB-set},x}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$, and the end CRB may be $RB_{s,x}^{\text{end},\mu}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid},x}^{\text{size},\mu}$.

Here, the start CRB and the end CRB for each RBS (911, 912) may be determined based on RBS index s, and RBS index s may be $s \in \{0, 1, ..., N_{\text{RB-set},x} - 1\}$. That is, RBS index s may be a resource block with a size of $RB_{s,x}^{\text{size},\mu}$, and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid},x}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

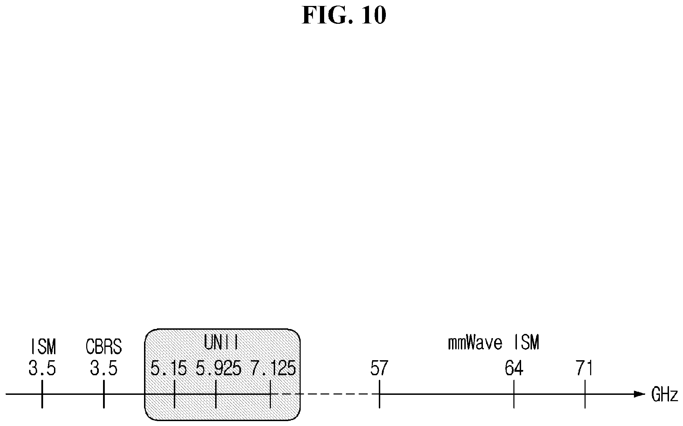

FIG. 10 illustrates an unlicensed band applicable to the present disclosure. Referring to FIG. 10, an NR-U band as an unlicensed band of a wireless communication system (e.g., NR) may be two frequency ranges as a low frequency band of 7 GHz or less and a high frequency band of 60 GHz. However, the band may be only one example and may not be limited thereto. For example, in FIG. 10, the band of 2.4 GHz may be used for industrial scientific medical (ISM), the band of 3.5 GHz may be used for citizens broadband radio services (CBRS), and the band of 5 GHz to 7 GHz may be used for unlicensed national information infrastructure (UNII). The UNII (5.925GHz to 7.125GHz) band may include a plurality of bands (UNII-1, UNII-2, ..., UNII-8). For each of the plurality of bands UNII (UNII-1, UNII-2, ..., UNII-8) within the UNII, different transmission power, indoor/outdoor operation, maximum power effective isotropic radiated power (EIRP), and dynamic frequency selection (DFS) requirements may be determined, but it may not be limited to a specific form.

The band of 5 GHz to 6GHz may be divided into non-overlapping 20 MHz channel bandwidths. Here, channels with wide bandwidths, such as 40 MHz, 80 MHz, and 160 MHz, may be configured based on boundaries. For example, a portion of 6 GHz band may coexist with a system using backhaul communication (UNII-5, UNII-7), satellite (UNII-5), broadcasting (UNII-6, UNII-8), and ultra wide band (UWB) system (UNII-6). The number of channels in the UNII-5 band (5.925 to 6.425 GHz) may be 24, 12, 6, and 4 in 20 MHz, 40 MHz, 80 MHz, and 160 MHz, respectively. Also, the UNII-5 band (5.925 to 6.425 GHz) may be used outside indoors and protected areas. Here, indoors may be determined as EIRP 30 dBm (AP) and 24 dBM (UE), and outdoors may be determined as EIRP 36 dBm (AP) and 30 dBM (UE), but they may not be limited to a specific form.

A channel described below may be a portion of a single carrier or a plurality of consecutive resource blocks (RBs) within the carrier. For example, a channel access procedure may be a procedure of verifying a channel based on sensing to perform transmission. In the case of performing the channel access procedure, the base station or the UE may perform energy detection based on a slot unit, and if it is less than or equal to a preset threshold, may determine that the channel is in an idle state. Hereinafter, a method of operating in the unlicensed band based on the aforementioned operation is described.

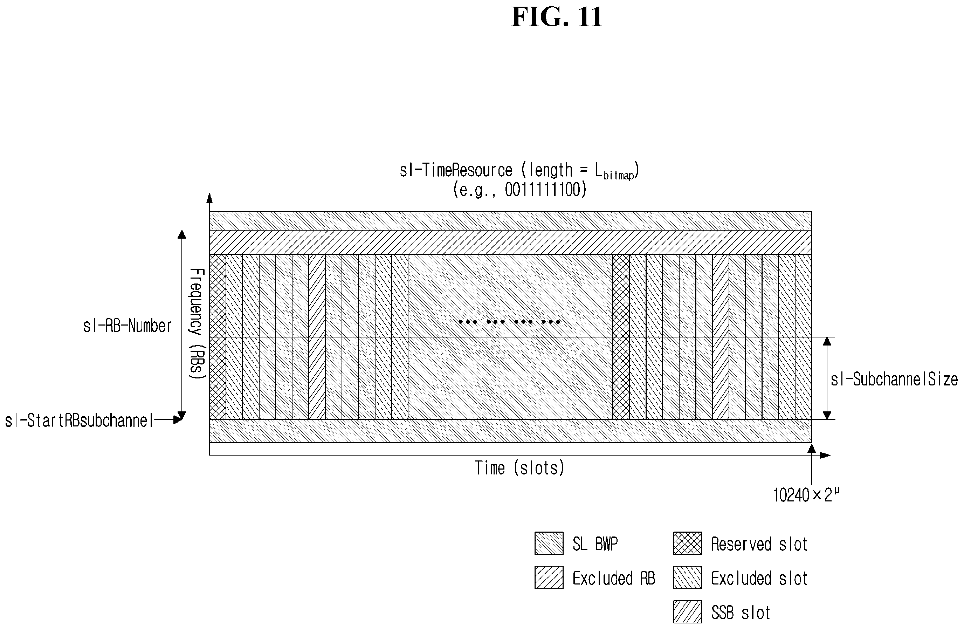

FIG. 11 illustrates a sidelink resource pool to which the present disclosure may apply. Referring to FIG. 11, the UE may be configured with a plurality of Tx resource pools (RPs) and Rx RPs. The resource pool may be identified by identification (ID), and added to or removed from the UE. Also, for example, each resource pool configuration may be different. In detail, physical sidelink control channel (PSCCH), physical sidelink shared channel (PSSCH), and physical sidelink feedback channel (PSFCH) configuration of the resource pool may be different for each resource pool. Also, the resource pool may be configured with a start location of a subchannel indicating a location of a resource, the number of RBs, and a subchannel size in terms of frequency within a sidelink bandwidth part (SL BWP). Also, in the resource pool, locations of time resources may be configured in a bitmap format. Here, time resources may be mapped except for slots used in SSB and uplink, and may be repeatedly applied for each bit configured within a system frame number (SFN).

In detail, for example, referring to FIG. 11, the UE may determine a resource location in a specific resource pool within the SL BWP. The subchannel size may represent a physical resource block (PRB) as a minimum unit that selects resources. Also, "sl-StartRBsubchannel" may denote a start RB of a subchannel within the SL BWP, "sl-RB-Number" may denote the number of RBs available within the SL BWP, and "sl-SubchannelSize" may denote a size of a single subchannel. The UE may determine the number of subchannels to be used within the SL BWP based on the aforementioned parameters. Also, for example, time axis resources may be indicated in slot units through "sl- TimeResource." In detail, for example, when the UE receives indication of "0011111100" as a 10-bit indicator, the UE may use resources of a slot indicating 1, excluding a slot that includes a reserved slot SSB. Also, the UE may not use a slot that is not included in the aforementioned subchannel RB within the SL BWP, or that is indicated with 0 in "sl-TimeResource." Also, for example, up to 4 SL BWPs may be configured, and one of the configured BWPs may be activated and used. Also, within the SL BWP, up to eight Tx resource pools may be configured and up to 16 Rx resource pools may be configured, which is not limited to a specific embodiment.

Also, the UE may receive data and perform decoding, and may transmit hybrid automatic repeat and request (HARQ) feedback as a response based on a reception success status. For example, the UE may determine whether decoding is a failure by combining an initial transmission and a retransmission. In a current wireless communication system (e.g., NR), both downlink (DL) and uplink (UL) use an asynchronous HARQ incremental redundancy (IR) method. The base station may provide HARQ feedback timing configuration to the UE through a radio resource control (RRC) message, and may flexibly indicate HARQ feedback timing through DCI.

In detail, for example, the base station may indicate transmission timing to the UE through DCI. For example, K0 within DCI may indicate an interval between DCI transmitted to a physical downlink control channel (PDCCH) and DL data transmitted to a physical downlink shared channel (PDSCH). Also, K1 within DCI may indicate an interval between PDSCH DL data reception and UL HARQ feedback timing transmitted to a physical uplink control channel (PUCCH). Also, K2 within DCI may indicate an interval between PDCCH UL grant reception and UL data transmitted to a physical uplink shared channel (PUSCH).

Also, for example, even in sidelink communication, a HARQ feedback operation may be considered. In detail, a medium access control (MAC) entity of the UE may include at most one sidelink HARQ entity for sidelink shared channel (SL-SCH) transmission. The sidelink HARQ entity may maintain up to 16 sidelink processes. The sidelink process may be configured to enable transmission of a plurality of MAC protocol data units (PUDs). For example, in resource allocation mode 2 in which the UE directly determines sidelink resources, the UE may configure up to four sidelink processes for multiple MAC PDU transmission. Also, a sidelink grant and information related to the sidelink grant delivered to the MAC entity may be configured in association with the sidelink process. Each sidelink process may be used to transmit a single transport block (TB).

As another example, a sidelink discontinuous reception (DRX) operation may be considered. Here, a sidelink DRX HARQ RTT timer (sl-drx-HARQ-RTT-Timer) may be configured to the sidelink process within the sidelink HARQ entity of the UE, and an operation based on this may be performed. The sidelink DRX HARQ RTT timer may be differently configured based on at least one of HARQ feedback disable/enable, presence or absence of a physical sidelink feedback channel (PSFCH), presence or absence of retransmission resources within SCI, and a HARQ feedback method (e.g., ACK/NACK, NACK Only).

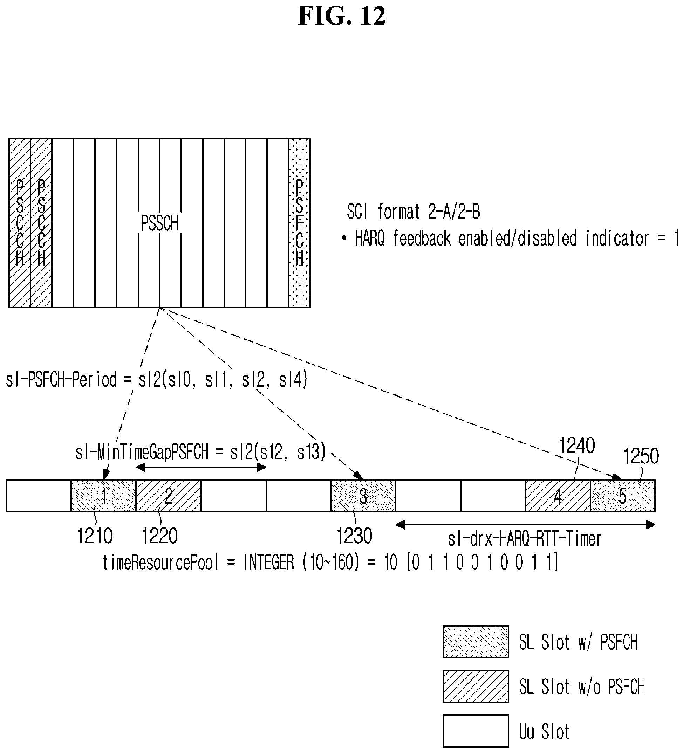

FIG. 12 illustrates a sidelink DRX HARQ RTT timer applied to the present disclosure. For example, FIG. 12 may be a case in which HARQ feedback is enabled with a HARQ feedback enable indicator within SCI set to a first value in a resource pool in which a PSFCH is configured, and retransmission resources are not indicated. However, it is only a configuration for clarity of description and is not limited to the corresponding embodiment.

In FIG. 12, a number 1 slot 1210 may be a slot in which the PSFCH is configured, and a number 2 slot 1220 may be a slot in which the PSFCH is not configured. When the UE receives a PSCCH and a PSSCH in the number 1 slot 1210, the UE may transmit HARQ feedback in a sidelink slot (slot 3 1230) in which the PSFCH is configured, after two slots based on the configured sl-MinTimeGapPSFCH parameter. The UE may expect to receive a retransmission grant or a new grant based on HARQ feedback in a first slot after PSFCH transmission, so may perform an operation based on the sidelink DRX HARQ RTT timer (sl-drx-HARQ-RTT-Timer) as the sidelink DRX timer configured by higher layer parameters. For example, the sidelink DRX HARQ RTT timer (sl-drx-HARQ-RTT-Timer) may refer to a minimum time before expecting assignment for HARQ retransmission, and the UE may be in a sleep state during the corresponding period of time. Also, the sidelink DRX HARQ RTT timer (SL drx-HARQ-RTT-Timer) may be configured for each HARQ process. For example, for clarity of description, it is referred to as the sidelink DRX HARQ RTT timer below, but the sidelink DRX HARQ RTT timer that performs the same function may also be referred to using a different name and may not be limited to a specific form. As another example, although the UE does not perform sidelink HARQ feedback transmission through UL transmission due to UL/SL prioritization, the UE may operate the sidelink DRX HARQ RTT timer (sl-drx-HARQ-RTT-Timer) in a first slot after PSFCH resource ends, to receive a retransmission grant.

For example, when retransmission resources are configured within SCI as a case in which HARQ feedback is enabled in a resource pool in which the PSFCH is configured, the sidelink DRX HARQ RTT timer (sl-drx-HARQ-RTT-Timer) may be derived by subsequent retransmission resource within SCI. As another example, when HARQ feedback is disabled and retransmission resources are absent within SCI, the UE may perform a sidelink DRX HARQ RTT timer (sl-drx-HARQ-RTT-Timer) operation after the PSFCH. On the other hand, when HARQ feedback is disabled and retransmission resources are present within SCI, the UE may operate the sidelink DRX HARQ RTT timer (sl-drx-HARQ-RTT-Timer) from the received PSSCH to subsequent retransmission resource within SCI, and this may reduce power consumption of the UE.

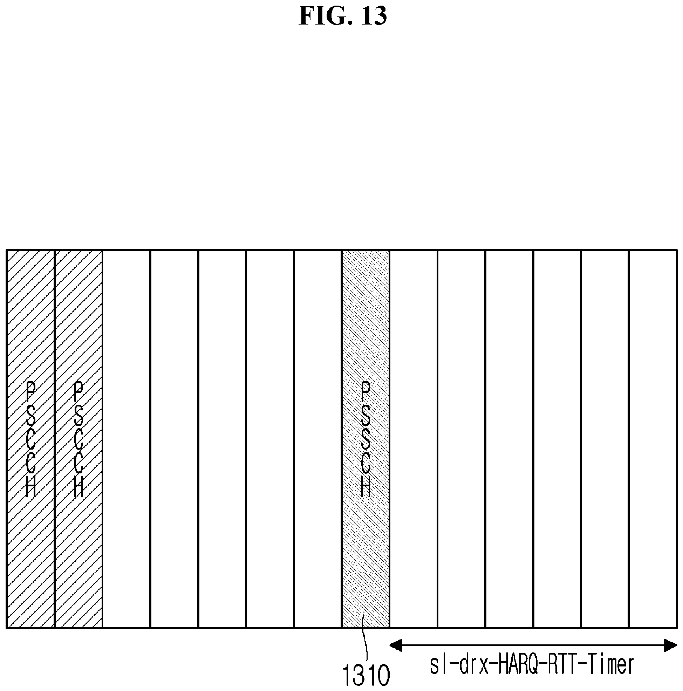

FIG. 13 illustrates a method of operating a sidelink timer in a resource pool in which a PSFCH is not configured. Referring to FIG. 13, the resource pool in which the PSFCH is not configured may be considered. Since the UE does not perform a HARQ feedback operation in the corresponding resource pool, the UE may operate a sidelink DRX HARQ RTT timer (sl-drx-HARQ-RTT-Timer) after a PSCCH 1310 indicated in SCI. For example, the sidelink DRX HARQ RTT timer (sl-drx-HARQ-RTT-Timer) may start based on a slot unit, and a timer length may be configured based on a slot unit. Also, the sidelink DRX HARQ RTT timer (sl-drx-HARQ-RTT-Timer) may differently operate depending on whether retransmission resources are present within SCI. In detail, for example, in a case in which retransmission resources are absent within SCI:

A. Operation may be different depending on whether retransmission resources are present within SCI. When retransmission resources are absent within SCI, the sidelink DRX HARQ RTT timer (sl-drx-HARQ-RTT-Timer) may operate regardless of HARQ feedback enable/disable. On the other hand, when retransmission resources are present within SCI, the sidelink DRX HARQ RTT timer (sl-drx-HARQ-RTT-Timer) may be set to a time from the PSSCH to the subsequent retransmission resource. As another example, two sidelink DRX HARQ RTT timer (sl-drx-HARQ-RTT-Timer) values may be set for presence and absence of the PSFCH within the resource pool, and it is not limited to a specific embodiment.

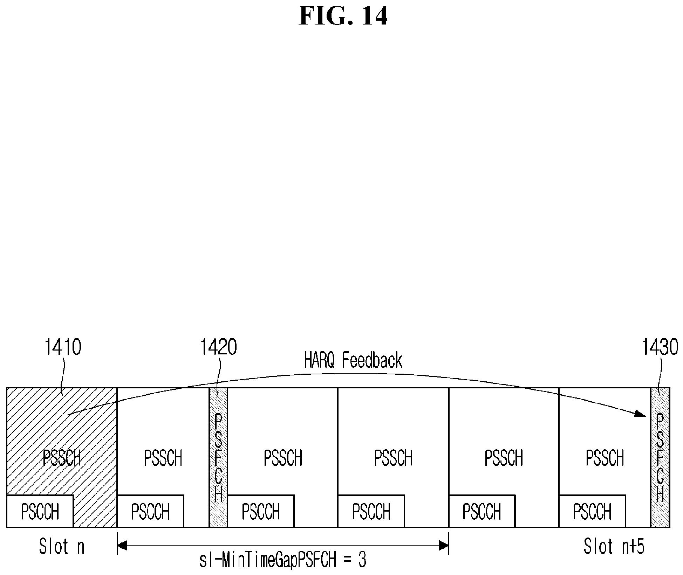

FIG. 14 illustrates a sidelink HARQ feedback operation applied to the present disclosure. Referring to FIG. 14, when an Rx UE receives a PSSCH 1410 in a slot n, the Rx UE may determine a PSFCH occasion to perform HARQ feedback according to a configured higher layer parameter (e.g., sl-MinTimeGapPSFCH). In detail, for example, in FIG. 14, as the higher layer parameter, sl-MinTimeGapPSFCH may be configured with three slots. The UE may perform HARQ feedback in a first PSFCH occasion 1430 that occurs after slot n+3 that is three slots from slot n. In detail, for example, a case in which a PSFCH period is set to 4 within the resource pool may be considered. However, it is only an example for clarity of description and the present disclosure may not be limited thereto. A PSFCH occasion may be configured for every four sidelink slots based on PSFCH period 4. In FIG. 14, when the UE receives the PSSCH 1410 in the slot n, the UE may perform HARQ feedback in slot n+5 in which the first PSFCH occasion 1430 is present after sl-MinTimeGapPSFCH.

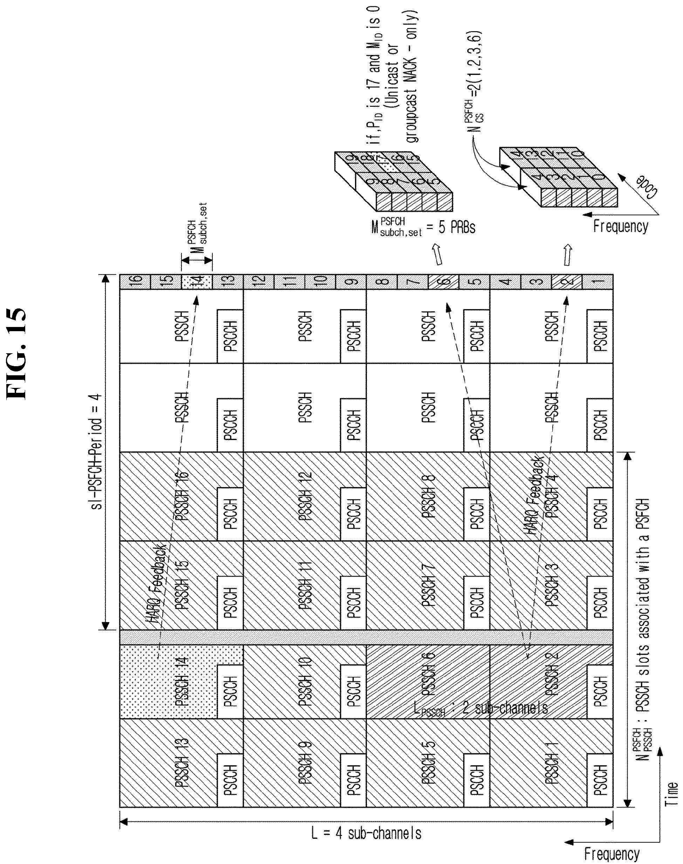

FIG. 15 illustrates PSSCH-PSFCH mapping for HARQ feedback transmission, applied to the present disclosure. Referring to FIG. 15, sidelink HARQ feedback resources may not be explicitly indicated and may be implicitly configured. The UE may derive PSSCH and PSFCH association relationship based on a pre-configured higher layer parameter, and may perform HARQ feedback through PSFCH resources associated with the received PSSCH. In detail, for example, in FIG. 15, the number of subchannels ($N_{subch}$, sl-NumSubchannel) within the resource pool is 4 and the PSFCH occasion may be configured for every four slots according to sl-PSFCH-period. Here, the number of PSSCH slots ( $N_{PSSCH}^{PSFCH}$ ) associated with a single PSFCH occasion may be 4. However, it is only an example for clarity of description and may not be limited to the corresponding embodiment.

The UE may perform PSFCH resource mapping according to the PSSCH through the configured parameter. Also, physical resource blocks (PRBs) ( $M_{PRB,set}^{PSFCH}$ ) for HARQ feedback within the PSFCH occasion may be indicated as 0 or 1 as a bit string. For example, the total number of PRBs ( $M_{PRB,set}^{PSFCH}$ ) for HARQ feedback within the PSFCH occasion may be 80. Here, 80 PRBs for HARQ feedback may represent PRBs indicated as 1 among 10 to 270 bit strings. 80 PRBs for HARQ feedback within one PSFCH occasion may be allocated to slots and subchannels associated with the PSFCH based on Equation 6 below.

[Equation 6]

$$\left[\left(i + j \cdot N_{PSSCH}^{PSFCH}\right) \cdot M_{subch,slot}^{PSFCH}, \left(i + 1 + j \cdot N_{PSSCH}^{PSFCH}\right) \cdot M_{subch,slot}^{PSFCH}\right]$$

Here, i ( $0 \leq i < N_{PSSCH}^{PSFCH}$ ) denotes a slot number associated with the PSFCH, and j ($0 \leq j < N_{subch}$) denotes a number of a subchannel. Also, $M_{subch,slot}^{PSFCH}$ denotes a value acquired by dividing the number of PRBs ( $M_{PRB,set}^{PSFCH}$ ) for HARQ feedback by the number of subchannels and the number of slots associated with the PSFCH. That is, the PRBs ( $M_{PRB,set}^{PSFCH}$ ) for HARQ feedback within the PSFCH occasion may be assigned by $M_{subch,slot}^{PSFCH}$ for each subchannel of slots associated with the PSFCH. For example, in FIG. 15, if the number of slots associated with the PSFCH is four with four subchannels, 16 subchannels may be present. Here, if the number of PRBs ( $M_{PRB,set}^{PSFCH}$ ) for HARQ feedback is 80, five PRBs ( $M_{subch,slot}^{PSFCH}$ ) for each subchannel may be used for HARQ feedback.

The UE selects a resource used to transmit HARQ feedback within subchannel associated PSFCH PRBs. In detail, in $M_{subch,slot}^{PSFCH}$, each PRB has two cyclic shift (CS) pairs ( $N_{CS}^{PSFCH}$, sl-NumMuxCS-pair), and when sl-PSFCH-CandidateResourceType is set to 'startSubCH' ( $N_{type}^{PSFCH} = 1$ ), the number of PSFCH candidate resources associated with a specific subchannel may be derived as shown in Equation 7.

[Equation 7]

$$R_{PRB,CS}^{PSFCH} = N_{type}^{PSFCH} \cdot M_{subch,slot}^{PSFCH} \cdot N_{CS}^{PSFCH}$$

Here, $R_{PRB,CS}^{PSFCH}$ may be 20, and numbers of 20 candidate resources may be determined according to CS order after PRB ascending order. The UE may select the PSFCH resource according to an index derived from Equation 8 below.

As another example, when sl-PSFCH-CandidateResourceType is set to allocSubCH ( $N_{type}^{PSFCH} = N_{subch}^{PSSCH}$ ), the number of PSFCH candidate resources may be differently configured.

[Equation 8]

$$\text{Index of a PSFCH resource} = (P_{ID} + M_{ID}) \bmod R_{PRB,CS}^{PSFCH}$$

Here, $P_{ID}$ denotes a physical layer source ID indicated through SCI format 2-A/2-B/2-C, and $M_{ID}$ denotes a higher layer UE ID used for groupcast HARQ ACK-NACK feedback. For example, in the case of unicast or groupcast HARQ NACK-only, $M_{ID}$ may be 0.

Also, for example, the UE may perform a listen before talk (LBT) procedure for channel occupancy in the unlicensed band. The LBT procedure may be a procedure of determining whether a channel is occupied through channel clear assessment (CCA) check before using the channel. The CCA check may be an operation of performing sensing during a CCA period. The CCA check may use energy detection (ED) to detect presence or absence of another signal in the channel. In detail, if energy (e.g., received signal strength, received signal strength indicator (RSSI)) detected during the CCA period is less than an ED threshold, the UE may determine that the channel is not occupied and may occupy the channel during a COT. On the other hand, if the energy detected during the CCA period is greater than the ED threshold, the UE may determine that the channel is occupied and the CCA period may be extended until the channel is occupied. For example, LBT may be a mandatory procedure for 5 GHz and 60 GHz unlicensed band operation in Europe and Japan, and may not be defined as an essential procedure in the United States and China. A CCA slot duration may be 9 μs at 5 GHz and may be 5 μs at 60 GHz, but may not be limited thereto. In more detail, an initial CCA may be set to a multiple of 5 μs at 60 GHz, an extended CCA may be set to 8+m×5 μs, and m may be configured as a backoff counter. Also, an ED threshold in 20 MHz channel bandwidth may be set to -72 dBm at 5 GHz, and may be set to -47 dBm at 60 GHz, but is not limited thereto.

Also, for example, LBT category may consider category 1 to category 4 shown in Table 10 below, but may not be limited thereto.

[Table 10]

| |
|---|
| - Category 1 (Cat 1 LBT): Transmission is performed immediately after 16 μs switching interval.<br>- Category 2 (Cat 2 LBT): LBT procedure without random backoff, and CCA period is fixed to 25 μs.<br>- Category 3 (Cat 3 LBT): LBT procedure with random backoff and fixed contention window, and extended CCA period is configured by random variables within fixed contention window.<br>- Category 4 (Cat 4 LBT): LBT procedure with random backoff and variable contention window, and extended CCA period is configured by random variables within contention window. |

Here, the UE may use different categories depending on the transmission purposes. For example, the UE and the base station may use Cat 4 LBT for data transmission purpose in license-assisted access (LAA). On the other hand, when the base station transmits a discovery reference signal, Cat 2 LBT may be used. As another example, in NR-U, if a transmission interval between DL and UL is less than 16 μs in a COT sharing operation in a situation in which the base station occupies a channel, the UE may perform Cat 1 LBT without CCA check. On the other hand, if the transmission interval between DL and UL is greater than 16 μs and less than 25 μs, the UE may perform Cat 2 LBT that uses short sensing. Also, if the transmission interval between DL and UL is greater than 25 μs, the UE may perform Cat 4 LBT used for general data transmission. Here, while the LAA may support one DL/UL switching, the NR-U may support multiple DL/UL switching.

Also, for example, continuous transmission may be limited in the unlicensed band in a specific area (e.g., Europe, Japan). That is, a maximum channel occupancy time (MCOT) as a time in which the UE may continuously use the channel may be limited. For example, the MCOT may be limited to 2 ms, 4 ms, or 6 ms according to priority class in the band of 5 GHz. Also, the MCOT may be limited to 9 ms in the band of 60 GHz, but may not be limited thereto. Also, for example, the UE and the baes station may share the COT in the band of 5 GHz and 60 GHz. That is, downlink (DL) and uplink (UL) transmission combination may be possible within COT. In detail, when the base station occupies the channel through the LBT procedure and performs DL transmission to the UE, the UE may perform UL transmission immediately without CCA check.

The UE may occupy and use a channel for the MCOT after LBT success. Here, the wireless communication system (e.g., NR) may inefficiently perform a transmission and reception operation of the unlicensed band compared to the existing wireless communication system (e.g., LTE) due to a flexible slot structure such as a mini slot. Therefore, the COT may be shared between the base station and the UE, and the UE may improve spectral efficiency or may perform a fast response operation.

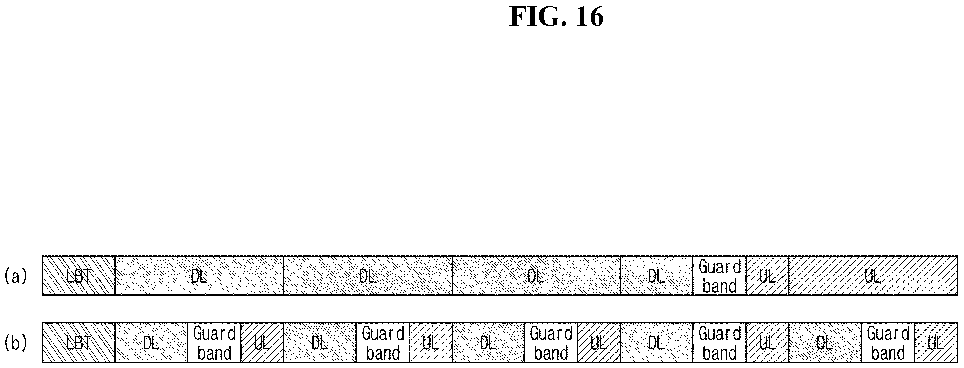

FIG. 16 illustrates a COT structure applied to the present disclosure. For example, the wireless communication system may support single DL/UL switching or multiple DL/UL switching. In detail, for example, referring to (a) of FIG. 16, single DL/UL switching may be a configuration in which single DL/UL switching is performed within the COT. The single DL/UL switching may reduce overhead since a guard band is small. If an interval between DL and UL is greater than 16 $\mu$s, a plurality of LBT procedures may not be performed. However, in single DL/UL switching, a UL operation is configured only once after a certain period of time after DL, so a delay in HARQ feedback and UL scheduling may occur. For example, the UL scheduling delay may occur even in a case in which Cat 4 LBT is attempted and fails when performing a UL operation. Considering the above, a single DL/UL switching COT configuration may be suitable for enhanced Mobile BroadBand (eMBB) traffic with high throughput and flexible delay requirements, but is not limited thereto.

Also, for example, referring to (b) of FIG. 16, multiple DL/UL switching COT configuration may be configured with a plurality of opportunities capable of performing UL. Therefore, in the multiple DL/UL switching COT configuration, HARQ feedback configuration may be simple. In the case of performing sensing according to UL transmission LBT (i.e., if an interval between UL and DL is greater than 16 $\mu$s), the multiple DL/UL switching COT configuration may ensure channel use. Since the base station performs CCA check for DL transmission, LBT may be successful if LBT is performed in a relatively close time. However, since the multiple DL/UL switching COT configuration includes a plurality of guard bands, a plurality of LBT procedures may need to be performed. Considering the above, the multiple DL/UL switching COT configuration may be suitable for massive Machine Type Communications (mMTC) with delay-sensitive traffic and low-load traffic, such as ultra-reliable low latency communications (URLLC) or enhanced V2X (eV2X), but is not limited thereto.

Also, for example, to limit interference between inter-RAT and intra-RAT in the unlicensed band operation, power (EIRP, PSD) may be limited in all areas and bands, as described above.

Also, for example, an occupied channel bandwidth (OCB) may be defined as that the bandwidth includes 99% of signal power in a specific area. This may indicate that most of the channel bandwidth needs to be used when accessing a channel in the unlicensed band. For example, the OCB may be 70 to 100% of a nominal channel bandwidth (NCB) at 5 GHz, and the OCB may be 80 to 100% of the NCB at 60 GHz, but is not limited thereto.

Also, as an unlicensed band scenario, licensed assisted access (LAA), the existing unlicensed band communication (LTE-unlicensed), and multi fire technologies may be defined for operation in the band of 5 GHz. However, the current unlicensed band communication (NR-unlicensed) may be designed by considering a plurality of bands, such as 2.4 GHz, 3.5 GHz, 5 GHz, 6 GHz, 37 GHz, and 60 GHz, but is not limited thereto. Also, for example, the unlicensed band may be divided into the band of 7 GHz or less and mmWave band. 7 GHz may include 2.4, 3.5, 5, and 6 GHz, and the mmWave band may include 37 GHz and 60 GHz, but it may not be limited thereto.

For example, sidelink communication may support an improved V2X application. Also, the sidelink communication may support proximity-based public safety and commercial services, but is not limited thereto. The sidelink communication may support an operation of improving power consumption in the UE with limited battery and a partial sensing, discontinuous reception (DRX), and inter-UE coordination operation to increase data reliability, but may not be limited thereto.

Also, an operation of considering an increased data rate in the sidelink communication (increased sidelink data rate) may be performed. For example, the increased data rate may be used to share sensor information of large data, such as a video, between vehicles that perform autonomous driving at a high level. The data rate may be improved based on a method, such as sidelink carrier aggregation or use of a sidelink unlicensed band, but may not be limited to the corresponding embodiment. Also, an operation of supporting new carrier frequencies for sidelink communication may be considered. The data rate may be improved through an FR2 sidelink operation with new frequencies and wide bandwidth. For example, currently, the use of intelligent transport system (ITS) frequency band may be limited to an application associated with ITS safety. However, if an operation, such as the use of the unlicensed band, is supported in sidelink communication, implementation of commercial services may be expected as the performance improves. Also, for example, a V2X scenario in which LTE V2X and NR V2X UEs share the same frequency channel may be considered. A method for different types of UEs to effectively perform resource allocation without adversely affecting each other may be required, but the method may not be limited thereto.

In the following, a HARQ DRX timer operation according to an SL-U operation is described in consideration of the above. For example, the UE may perform an LBT procedure in the SL-U and may perform a sidelink transmission in the COT according to LBT success. On the other hand, if the UE performs the LBT procedure in the SL-U and does not occupy the channel due to LBT failure, the UE may not perform the sidelink transmission. The HARQ DRX timer operation considering the above is described below.

For example, the UE may perform an LBT operation in the unlicensed band, may perform sidelink transmission if a channel is occupied based on LBT success, and may not perform the sidelink transmission if the channel is not occupied. If the UE fails in LBT, the UE may not perform HARQ feedback transmission through the PSFCH. Also, as described above, in the unlicensed band, other communication technologies (e.g., Wi-Fi) coexist and the channel needs to be equally used, so requirements such as MCOT may be considered. In detail, for example, through the LBT procedure, the UE may occupy and use the channel during a limited period of time if the received signal strength does not exceed a specific power threshold.

Here, the existing HARQ feedback operation may be semi-statically configured. A PSFCH occasion for HARQ feedback may be semi-statically configured, but needs to be improved considering the SL-U operation. For example, the HARQ feedback operation may support an operation of configuring a plurality of consecutive or nonconsecutive PSFCH transmission opportunities by considering the SL-U. As another example, the HARQ feedback operation may support a dedicated PSFCH resource indication operation by considering the SL-U. As another example, the HARQ feedback operation may support a dedicated PSSCH resource indication operation by considering the SL-U. However, it is only an example and the present disclosure may not be limited thereto.

For example, multiple PSFCH transmission opportunities considering the SL-U may represent at least one of semi-statically configured PSFCH occasions. As another example, the multiple PSFCH transmission opportunities considering the SL-U may represent at least one of the semi-statically configured PSFCH occasions and dynamically indicated dedicated PSFCH resources. For example, the dynamically indicated HARQ feedback resource may be a method of indicating a HARQ feedback resource with SCI. Here, SCI may indicate a specific resource or a PSSCH resource in the semi-statically configured PSFCH occasion as the HARQ feedback resource.

In detail, for example, as the multiple HARQ feedback transmission opportunities considering the SL-U, semi-static PSFCH configuration or semi-static PSFCH configuration and dynamic PSFCH/PSSCH resource indication operation may be considered, which may be as shown in Table 11 below. Also, as a single HARQ feedback transmission opportunity, the dynamic PSSCH resource indication for HARQ feedback may be considered. Also, as a single HARQ feedback transmission opportunity, the semi-static PSFCH configuration may be considered, which may be as shown in Table 11 below.

[Table 11] ]

| Multiple HARQ Feedback transmission opportunities |
|---|
| - Semi-static PSFCH configuration<br>- Semi-static PSFCH configuration + Dynamic PSFCH/PSSCH resource indication |
| **Single HARQ Feedback transmission opportunity** |
| - Dynamic PSSCH resource indication for HARQ Feedback<br>- Semi-static PSFCH configuration |

Also, a sidelink DRX timer (sl-drx-HARQ-RTT-Timer, sl-drx-RetransmissionTimer) operation considering an additional PSFCH transmission opportunity may be required, and description related thereto is made.

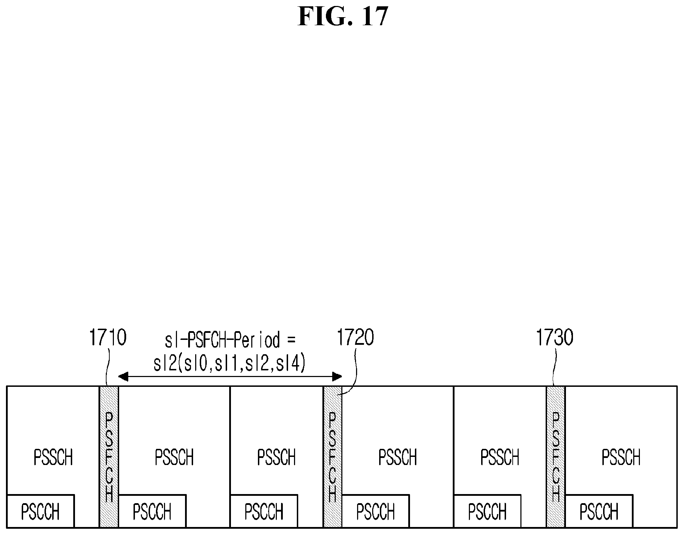

For example, FIG. 17 illustrates a method of configuring multiple PSFCH transmission opportunities and a method of configuring a sidelink DRX timer based on this, applied to the present disclosure. Referring to FIG. 17, PSFCH resources 1710, 1720, and 1730 may be semi-statically configured in sidelink slots. An interval between the PSFCH resources 1710, 1720, and 1730 may be semi-statically configured by a parameter indicating a PSFCH period (sl-PSFCH-period). For example, in FIG. 17, a PSFCH interval may be configured using two slots. In detail, a PSFCH resource may be configured in a sidelink slot number in which "logical sidelink slot number modulo sl-PSFCH-Period" becomes 0. However, it is only a configuration for clarity of description, but the present disclosure may not be limited thereto.

Here, the sidelink DRX timer may be configured to variably operate. The sidelink DRX timer may be configured to reduce power consumption of the Rx UE by considering an operation of transmitting and receiving a retransmission grant between the Tx UE and the Rx UE. For example, the sidelink DRX timer needs to operate at a specific point in time among multiple HARQ feedback transmission opportunities in consideration of the above. The multiple HARQ feedback transmission opportunities may be opportunities that the Tx UE may determine ACK/NACK for sidelink data based on HARQ feedback. The Tx UE may generate the retransmission grant by considering a point in time at which HARQ feedback information is actually received during the HARQ feedback transmission opportunity. Therefore, the Rx UE may operate the sidelink DRX HARQ RTT timer (sl-drx-HARQ-RTT-Timer) as the sidelink DRX timer after succeeding in HARQ feedback transmission during the HARQ feedback transmission opportunity. Then, the Rx UE may operate the sidelink DRX retransmission timer (sl-drx-RetransmissionTimer) as the sidelink DRX timer to receive a retransmission grant based on whether received data decoding is successful. For example, the sidelink DRX retransmission timer may be a timer for the maximum period until a sidelink retransmission is received.

As another example, when the multiple HARQ feedback transmission opportunities are configured, the sidelink DRX timer operation may be fixed to a specific point in time. For example, the Tx UE may not receive HARQ feedback within the configured multiple HARQ feedback transmission opportunities, and the Tx UE may not recognize the reason for HARQ feedback reception failure. In detail, for example, when the Rx UE fails in LBT, the Rx UE may not perform HARQ feedback transmission to the Tx UE. As another example, the Rx UE may not perform sidelink HARQ feedback transmission by a UL operation based on a UL/SL prioritization operation. As another example, the Rx UE may not perform HARQ feedback transmission due to a poor channel condition, but may not be limited thereto.

Considering the above, the sidelink DRX timer may be configured to be performed in a specific transmission opportunity among the configured multiple HARQ feedback transmission opportunities, and based on this, retransmission grant transmission and reception may be performed. In detail, for example, the sidelink DRX timer may operate in a last transmission opportunity among the HARQ feedback transmission opportunities. As another example, the sidelink DRX timer may operate in a different transmission opportunity, and is not limited to a specific embodiment.

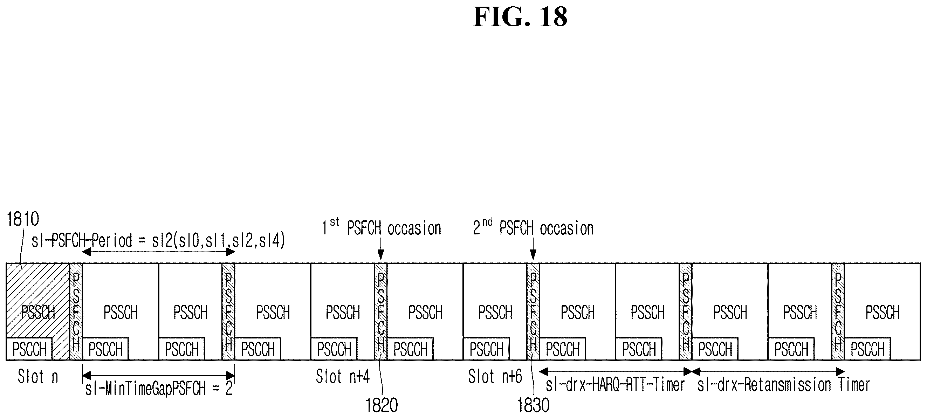

As another example, FIG. 18 illustrates a method of configuring multiple HARQ feedback transmission opportunities through semi-statically configured PSFCH configuration and performing a sidelink DRX timer operation based on this, applied to the present disclosure. Referring to FIG. 18, the Rx UE may receive SCI and data from the Tx UE through a PSCCH/PSSCH 1810 in slot n. The Rx UE may perform HARQ feedback in slot n+4 that includes a first PSFCH occasion 1820 after two slots indicated by a parameter set as a minimum time gap for a PSFCH (e.g., sl-MinTime-GapPSFCH). Also, when the multiple HARQ feedback transmission opportunities are configured and enabled in the UE, the Rx UE may perform n-th HARQ feedback transmission in a PSFCH occasion 1830 of slot n+6 with a resource capable of transmitting HARQ feedback.

For example, the sidelink DRX timer operation considering the aforementioned situation needs to be configured. In detail, the sidelink DRX timer may be variably determined. The sidelink DRX timer may operate after succeeding in an LBT procedure and transmitting HARQ feedback during the HARQ feedback transmission opportunity. Referring to FIG. 18, a case in which the Rx UE does not transmit HARQ feedback due to LBT failure in the PSFCH occasion 1820 of slot n+4 and succeeds in transmitting HARQ feedback due to LBT success in the PSFCH occasion 1830 of slot n+6 may be considered. However, it is only an example for clarity of description and the present disclosure is not limited thereto. That is, the Rx UE may perform HARQ feedback transmission in the PSFCH occasion 1830 of slot n+6. Here, the sidelink DRX HARQ RTT timer (sl-drx-HARQ-RTT-Timer) as the sidelink DRX timer may operate after the PSFCH occasion 1830 of transmitting HARQ feedback. If the sidelink DRX HARQ RTT timer (sl-drx-HARQ-RTT-Timer) expires, and data of a corresponding sidelink process is not successfully decoded or HARQ feedback is NACK, the Rx UE may operate the sidelink DRX HARQ retransmission timer (sl-drx-HARQ-RetransmissionTimer) and may expect to receive a retransmission grant through PSCCH monitoring.

As another example, the sidelink DRX timer may be fixed after the specific HARQ feedback transmission opportunity among the HARQ feedback transmission opportunities. For example, the sidelink DRX timer may operate after the last HARQ feedback transmission opportunity. Referring to FIG. 18, a case of succeeding in HARQ feedback transmission based on LBT success in the PSFCH occasion 1820 of slot n+4 may be considered. However, even in the above case, the sidelink DRX timer is fixed to operate after the last HARQ feedback transmission opportunity, so the sidelink DRX HARQ RTT timer (sl-drx-HARQ-RTT-Timer) may be operated after the PSFCH occasion 1830 present in slot n+6 as the last HARQ feedback opportunity. If the sidelink DRX HARQ RTT timer (sl-drx-HARQ-RTT-Timer) expires and data of the corresponding sidelink process is not successfully decoded or HARQ feedback is NACK, the Rx UE may operate the sidelink DRX HARQ retransmission timer (sl-drx-HARQ-RetransmissionTimer) and may expect to receive a retransmission grant through PSCCH monitoring. For example, although description is made in FIG. 18 based on a case in which the number of multiple HARQ feedback transmission opportunities is two, two or more HARQ feedback transmission opportunities may be configured without being limited thereto.

Also, for example, a method of indicating multiple HARQ feedback transmission opportunities may be variously configured. For example, consecutive PSFCH occasions may be indicated and fixable N PSFCH occasions may be indicated through RRC. That is, the Rx UE may acquire HARQ feedback transmission opportunities in N consecutive PSFCH occasions, starting from the specific PSFCH occasion.

As another example, in the case of indicating nonconsecutive PSFCH occasions, the UE may acquire an offset parameter for an n-th PSFCH occasion through RRC. For example, the Rx UE may acquire an offset parameter for a second PSFCH occasion (e.g., sl-2ndMinTimeGapPSFCH) and based on this, may acquire the HARQ feedback transmission opportunity. As another example, the UE may acquire the aforementioned consecutive PSFCH occasion or offset values through SCI rather than RRC, and is not limited to a specific form.

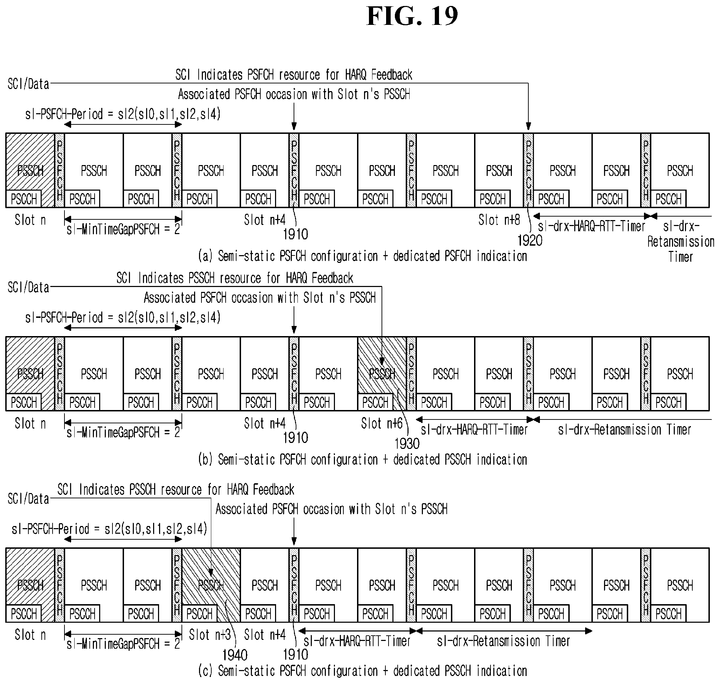

FIG. 19 illustrates a method of configuring multiple HARQ feedback transmission opportunities with a semi-statically configured PSFCH occasion and dedicated PSFCH resource and, based on this, operating a sidelink DRX timer, applied to the present disclosure. For example, in FIG. 19, the dedicated PSFCH resource may be a specific physical resource block (PRB) within the semi-statically configured PSFCH occasion or the specific resource within a PSSCH.

In detail, for example, referring to (a) of FIG. 19, the dedicated PSFCH resource may be the specific PRB resource within the semi-statically configured PSFCH occasion. For example, the dedicated PSFCH resource may be indicated through SCI, and the corresponding PSFCH resource may be added to the HARQ feedback transmission opportunity. For example, the sidelink DRX timer may operate after the specific HARQ feedback transmission opportunity among the HARQ feedback transmission opportunities in a fixed form. For example, the sidelink DRX timer may operate after the last HARQ feedback transmission opportunity, but may not be limited thereto. In (a) of FIG. 19, the UE may receive SCI and data through the PSCCH/PSSCH of slot n. The Rx UE may recognize that a PSFCH occasion 1910 located in slot n+4 is a HARQ feedback transmission opportunity in association with the PSSCH received in slot n. Also, the Rx UE may recognize that a dedicated PSFCH resource 1920 indicated through the SCI is a HARQ feedback transmission opportunity.

That is, the Rx UE may recognize that the PSFCH occasion 1910 located in slot n+4 may be the first HARQ feedback transmission opportunity, and the PSFCH occasion 1920 located in slot n+8 may be the second HARQ feedback transmission opportunity. Here, for example, the Rx UE may not transmit HARQ feedback due to LBT failure in the first HARQ feedback transmission opportunity 1910 located in slot n+4, and may succeed in LBT in the second HARQ feedback transmission opportunity 1920 located in slot n+8 and may perform HARQ feedback transmission accordingly. However, this is only an example for clarity of description and the present disclosure is not limited thereto.

The Rx UE may perform HARQ feedback in slot n+8 that is the second and the last PSFCH transmission opportunity to receive the retransmission grant and then, may operate the sidelink DRX HARQ RTT timer (sl-drx-HARQ-RTT-Timer) as the sidelink DRX timer. If the sidelink DRX HARQ RTT timer (sl-drx-HARQ-RTT-Timer) expires as the timer, and data of the corresponding sidelink process is not successfully decoded or HARQ feedback is NACK, the Rx UE may operate the sidelink DRX HARQ retransmission timer (sl-drx-HARQ-RetransmissionTimer) and may expect to receive the retransmission grant through PSCCH monitoring. Also, for example, the dedicated PSFCH resource may not be present temporally before the associated first PSFCH resource. For example, since the PSFCH resource semi-statically configured by a network is set through sl-MinTimeGapPSFCH by considering the PSFCH period and the Tx/Rx switching time, the additionally dedicated PSFCH resource may have a temporal priority over the first PSFCH resource.

Also, for example, referring to (b) of FIG. 19, the dedicated PSFCH resource may be indicated within a PSSCH resource 1930. For example, the PSFCH resource indicated within the PSSCH resource 1930 may be indicated through SCI, and the corresponding PSFCH resource may be added to the HARQ feedback transmission opportunity.

In (b) of FIG. 19, the UE may receive SCI and data through the PSCCH/PSSCH of slot n. The Rx UE may recognize that the PSFCH occasion 1910 located in slot n+4 is the HARQ feedback transmission opportunity in association with the PSSCH received in slot n. Also, the Rx UE may recognize that the PSFCH resource dedicated within the PSSCH resource 1930 indicated by SCI is the HARQ feedback transmission opportunity. That is, the Rx UE may recognize that the PSFCH occasion 1910 located in slot n+4 may be the first HARQ feedback transmission opportunity, and the PSFCH resource within the PSSCH 1930 located in slot n+6 may be the second HARQ feedback transmission opportunity. Here, for example, the Rx UE may not transmit HARQ feedback due to LBT failure in the first HARQ feedback transmission opportunity 1910 located in slot n+4, and may succeed in LBT in the second HARQ feedback transmission opportunity located in slot n+6 and may perform HARQ feedback transmission accordingly. However, it is only an example for clarity of description and the present disclosure is not limited thereto.

The Rx UE may perform HARQ feedback in slot n+6 that is the second and the last PSFCH transmission opportunity to receive the retransmission grant and then, may operate the sidelink DRX HARQ RTT timer (sl-drx-HARQ-RTT-Timer) using the sidelink DRX timer as the timer. If the sidelink DRX HARQ RTT timer (sl-drx-HARQ-RTT-Timer) expires as the timer, and data of the corresponding sidelink process is not successfully decoded or HARQ feedback is NACK, the Rx UE may operate the sidelink DRX HARQ retransmission timer (sl-drx-HARQ-RetransmissionTimer) and may expect to receive the retransmission grant through PSCCH monitoring.

Also, for example, referring to (c) of FIG. 19, a dedicated PSFCH resource may be dedicated within a PSSCH resource 1940. For example, the PSFCH resource dedicated within the PSSCH resource 1940 may be indicated through SCI, and the corresponding PSFCH resource may be added to the HARQ feedback transmission opportunity. In (c) of FIG. 19, the UE may receive SCI and data through the PSCCH/PSSCH of slot n. The Rx UE may recognize that the PSFCH occasion 1910 located in slot n+4 is the HARQ feedback transmission opportunity in association with the PSSCH received in slot n. Also, the Rx UE may recognize that the dedicated PSFCH resource within the PSSCH resource 1940 indicated by SCI is the HARQ feedback transmission opportunity. Here, the dedicated PSFCH resource within the PSSCH resource 1940 may be located within slot n+3. That is, the dedicated PSFCH resource within the PSSCH resource 1940 of slot n+3 may be the first HARQ feedback transmission opportunity, and the PSFCH resource 1910 located in slot n+4 may be the second HARQ feedback transmission opportunity. Here, for example, the Rx UE may not transmit HARQ feedback due to LBT failure in the first HARQ feedback transmission opportunity located in slot n+3, and may succeed in LBT in the second HARQ feedback transmission opportunity 1910 located in slot n+4 and may perform HARQ feedback transmission. However, it is only an example for clarity of description and the present disclosure is not limited thereto. The Rx UE may perform HARQ feedback in slot n+4 that is the second and last PSFCH transmission opportunity to receive the retransmission grant and may operate the sidelink DRX HARQ RTT timer (sl-drx-HARQ-RTT-Timer) using the sidelink DRX timer as the timer. If the sidelink DRX HARQ RTT timer (sl-drx-HARQ-RTT-Timer) expires as the timer and data of the corresponding sidelink process is not successfully decoded or HARQ feedback is NACK, the Rx UE may operate the sidelink HARQ retransmission timer (sl-drx-HARQ-RetransmissionTimer) and may expect to receive the retransmission grant through PSCCH monitoring.

As another example, a case in which HARQ feedback is performed only through a semi-statically configured PSFCH may be considered. For example, HARQ feedback may be performed in one HARQ feedback transmission opportunity, and a sidelink DRX operation may be performed based on this. However, considering the MCOT limit in the SL-U, the HARQ feedback operation may be limited and an improvement operation may be required for this.

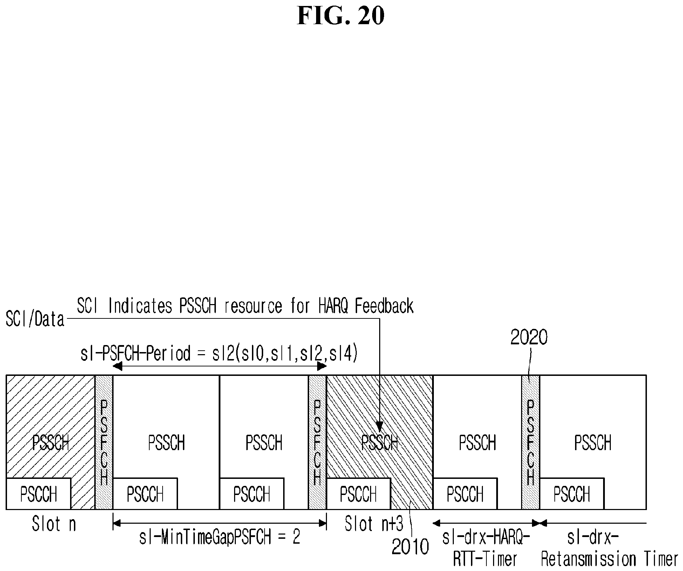

In detail, for example, FIG. 20 illustrates a dedicated PSSCH resource for HARQ feedback in consideration of a single HARQ feedback transmission opportunity, applied to the present disclosure. Referring to FIG. 20, the Rx UE may receive SCI and data through a PSCCH/PSSCH of slot n. Here, SCI may indicate a HARQ feedback PSSCH resource 2010 as a PSFCH resource for HARQ feedback. The Rx UE may perform HARQ feedback through the HARQ feedback PSSCH resource 2010. For example, when multiple HARQ feedback transmission opportunities are disabled, the Rx UE may transmit HARQ feedback in the HARQ feedback PSSCH resource 2010 indicated by SCI, and may not perform HARQ feedback transmission in a PSFCH resource 2020 located in slot n+4 associated with the PSSCH of slot n. The Rx UE may operate the sidelink DRX HARQ RTT timer (sl-drx-HARQ-RTT-Timer) as the timer after the indicated HARQ feedback PSSCH resource 2010. If the sidelink DRX HARQ RTT timer (sl-drx-HARQ-RTT-Timer) expires as the timer and data of the corresponding sidelink process is not successfully decoded or HARQ feedback is NACK, the Rx UE may operate the sidelink DRX HARQ retransmission timer (sl-drx-HARQ-RetransmissionTimer) and may expect to receive the retransmission grant through PSCCH monitoring.

Here, for example, as shown in Table 12 below, the Tx UE may receive HARQ information from a physical layer in a PSFCH reception occasion according to PSSCH transmission and, without receiving this, may deliver NACK in the corresponding sidelink process. Also, if the Tx UE does not receive HARQ feedback information in the PSFCH reception occasion, the Tx UE may increase a counter (e.g., numConsecutiveDTX). Here, if the corresponding counter (e.g., numConsecutiveDTX) reaches a threshold (e.g., sl-maxNumConsecutiveDTX), HARQ-based sidelink radio link failure (RLF) may occur. However, Table 12 is only an example and the present disclosure may not be limited thereto.

If the sidelink RLF occurs, the Tx UE (source UE) established with a PC5-RRC link may release the Rx UE (destination UE), a data radio bearer (DBR) and a signaling radio bearer (SRB), and may delete a sidelink configuration. Also, the Tx UE may reset MAC, and may release the Rx UE and the PC5-RRC.

[Table 12]

| |
|---|
| TS 38.321 |
| 5.22.1.3.2    PSFCH reception |
| The MAC entity shall for each PSSCH transmission: |
| 1> if an acknowledgement corresponding to the PSSCH transmission in clause 5.22.1.3.1a is obtained from the physical layer: |
| 2> deliver the acknowledgement to the corresponding Sidelink HARQ entity for the Sidelink process; |
| 1>else: |
| 2> deliver a negative acknowledgement to the corresponding Sidelink HARQ entity for the Sidelink process; |
| 1> if the PSSCH transmission occurs for a pair of Source Layer-2 ID and Destination Layer-2 ID corresponding to a PC5-RRC connection which has been established by upper layers: |
| 2> perform the HARQ-Based Sidelink RLF Detection procedure as specified in clause 5.22.1.3.3. |

| |
|---|
| 5.22.1.3.3    HARQ-based Sidelink RLF detection |
| The HARQ-based Sidelink RLF detection procedure is used to detect Sidelink RLF based o n a number of consecutive DTX on PSFCH reception occasions for a PC5-RRC connection. |
| RRC configures the following parameter to control HARQ-based Sidelink RLF detection: |
| - sl-maxNumConsecutiveDTX. |
| The following UE variable is used for HARQ-based Sidelink RLF detection. |
| - numConsecutiveDTX, which is maintained for each PC5-RRC connection. |

(continued)

5.22.1.3.3 HARQ-based Sidelink RLF detection

The Sidelink HARQ Entity shall (re-)initialize *numConsecutiveDTX* to zero for each PC5-RRC connection which has been established by upper layers, if any, upon establishment of the PC5-RRC connection or (re)configuration of *sl-maxNumConsecutiveDTX.*

The Sidelink HARQ Entity shall for each PSFCH reception occasion associated to the PSSCH transmission:

> 1> if PSFCH reception is absent on the PSFCH reception occasion:
>> 2> increment *numConsecutiveDTX* by 1;
>> 2> if *numConsecutiveDTX* reaches *sl-maxNumConsecutiveDTX:*
>>> 3> indicate HARQ-based Sidelink RLF detection to RRC.
> 1> else:
> 2> re-initialize *numConsecutiveDTX* to zero.

The sidelink RLF may be a procedure of detecting a problem in a channel condition/physical layer and configured configuration. For example, in the SL-U environment, HARQ feedback transmission may be impossible due to LBT failure, and this case may be different from the RLF and may require an operation that considers the SL-U.

In detail, for example, when multiple HARQ feedback transmission opportunities are configured, a counter for RLF (numConsecutiveDTX) may be configured to increase if HARQ feedback is not received in all HARQ transmission opportunities based on bundling of the multiple HARQ feedback transmission opportunities. That is, since LBT failure is not failure according to the channel condition, determination for the RLF may be performed based on the entire multiple HARQ feedback transmission opportunities.

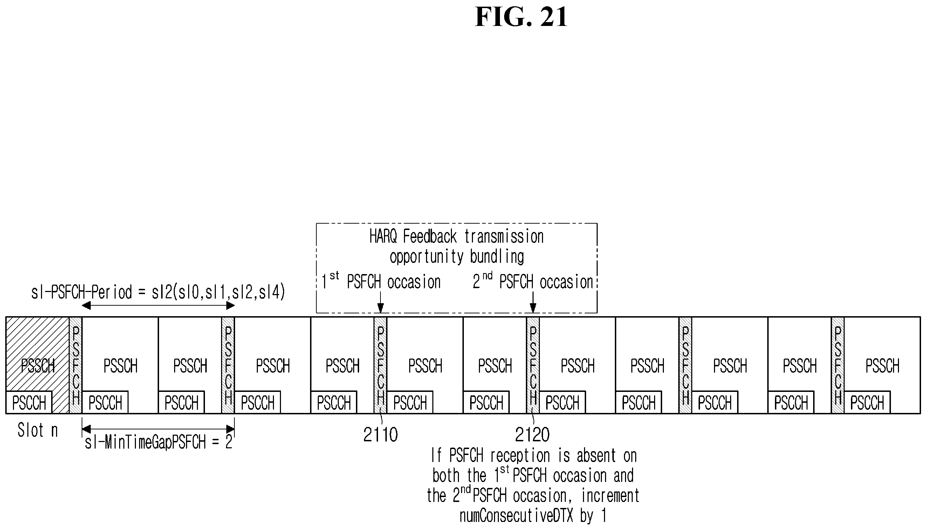

FIG. 21 illustrates a HARQ feedback transmission opportunity bundling operation to which the present disclosure applies. Referring to FIG. 21, the Tx UE may transmit SCI and data through a PSCCH/PSSCH in slot n. Here, in slot n, a plurality of PSFCH occasions associated with the PSCCH/PSSCH may be semi-statistically configured. For example, in FIG. 21, although a first PSFCH occasion 2110 and a second PSFCH occasion 2120 are configured as the multiple HARQ feedback transmission opportunities, it is provided as an example for clarity of description and the present disclosure is not limited thereto. That is, the number of multiple HARQ feedback transmission opportunities may be configured as two or more.

Referring to FIG. 21, the Tx UE and the Rx UE may bundle the HARQ feedback transmission opportunities, and may perform HARQ feedback transmission and reception. The Tx UE may determine whether to increase the counter for RLF (numConsecutiveDTX) based on HARQ feedback transmission opportunity bundling. In detail, for example, a MAC entity of the UE may perform a HARQ-based sidelink RLF detection procedure if PSSCH transmission corresponding to a source layer-2 ID and destination layer-2 ID pair occurs. For example, the UE may configure and receive the counter for RLF (numConsecutiveDTX), threshold for RLF (sl-maxNumConsecutiveDTX), and HARQ Feedback transmission opportunity bundling information based on higher layer configuration. The UE may not receive HARQ feedback for each PSFCH reception occasion 2110, 2120 associated with PSSCH transmission, and may increase the counter (numConsecutiveDTX) by 1 if the corresponding PSFCH reception occasion is the last occasion of HARQ feedback transmission opportunity bundling. On the other hand, if the corresponding PSFCH reception occasion is not the last occasion of HARQ feedback transmission opportunity bundling, the counter (numConsecutiveDTX) may not increase. Also, for example, the UE may initialize the counter (numConsecutiveDTX) to 0 if HARQ feedback reception is present in the PSFCH reception occasion associated with the PSSCH transmission. The UE may indicate to the higher layer that sidelink RLF is detected if the counter (numConsecutiveDTX) reaches the threshold for RLF (maxNumConsecutiveDTX).

In detail, for example, in FIG. 21, although the Tx UE does not receive HARQ feedback in the first PSFCH occasion 2110, the Tx UE may not increase the counter (numConsecutiveDTX). If the UE does not receive HARQ feedback even in the second PSFCH occasion 2120 as the last occasion, the UE may increase the counter (numConsecutiveDTX) by 1. On the other hand, if the Tx UE receives HARQ feedback in the first PSFCH occasion 2110, the Tx UE may not increase the counter (numConsecutiveDTX) regardless of whether the Tx UE receives HARQ feedback in the second PSFCH occasion 2120. Also, if the Tx UE does not receive HARQ feedback in the first PSFCH occasion 2110 and receives HARQ feedback in the second PSFCH occasion 2120, the Tx UE may not increase the counter (numConsecutiveDTX). For example, in FIG. 21, description is made based on the PSFCH reception occasion, it may not be limited thereto. For example, the aforementioned operation may include a HARQ feedback occasion through the PSSCH/PSCCH. As another example, the counter (numConsecutiveDTX) may be configured to increase if HARQ feedback is absent in a specific occasion rather than the last occasion in HARQ feedback transmission bundling.

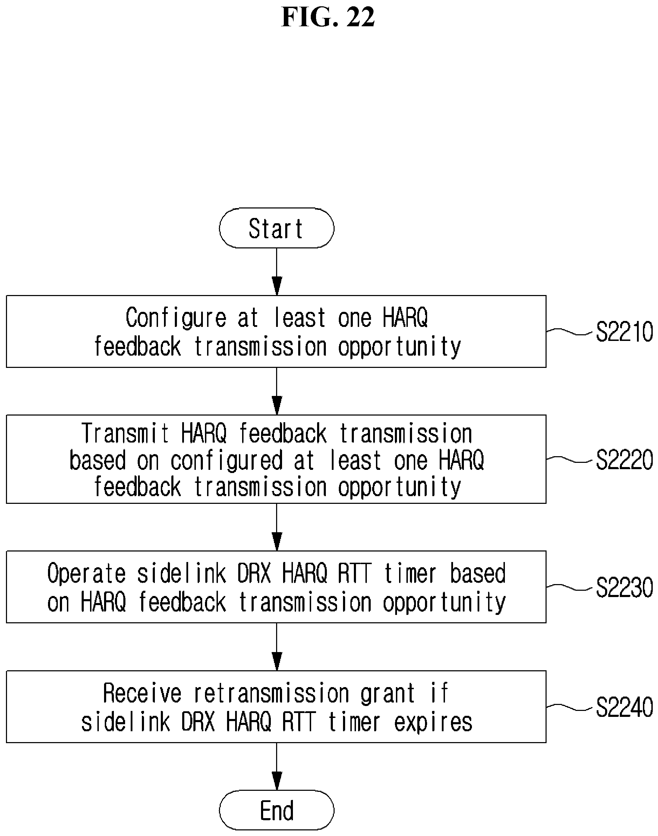

FIG. 22 is a flowchart illustrating an operation of a wireless UE to which the present disclosure may apply. For example, the wireless UE may be the aforementioned UE and may not be limited to a specific form. Referring to FIG. 22, the wireless UE may be configured with at least one HARQ feedback transmission opportunity (S2210). That is, the wireless UE may be configured with multiple HARQ feedback transmission opportunities or a single HARQ feedback transmission opportunity. The wireless UE may transmit HARQ feedback based on the configured at least one HARQ feedback transmission opportunity (S2220). The wireless UE may operate a sidelink DRX HARQ RTT timer based on a HARQ feedback transmission (S2230), and may receive a retransmission grant if the sidelink DRX HARQ RTT timer expires (S2240). Here, if the sidelink DRX HARQ RTT timer expires and data of a sidelink process is not successfully decoded or HARQ feedback information is NACK, the wireless UE may be configured to receive the retransmission grant based on the sidelink DRX HARQ retransmission timer. Here, for example, the at least one HARQ feedback transmission opportunity may be configured to be plural based on at least one of semi-static physical sidelink feedback channel (PSFCH) configuration and dynamic PSFCH resource indication. For example, the sidelink DRX HARQ RTT timer may be variably configured based on a HARQ feedback transmission opportunity that succeeds in a HARQ feedback transmission among the multiple HARQ feedback transmission opportunities. As another example, the sidelink DRX HARQ RTT timer may operate based on a specific HARQ feedback transmission opportunity among the multiple HARQ feedback transmission opportunities. Here, the specific HARQ feedback transmission opportunity may refer to a last HARQ feedback transmission opportunity among the multiple HARQ feedback transmission opportunities, but may not be limited thereto.

As another example, the at least one HARQ feedback transmission opportunity may be a single HARQ feedback transmission opportunity. Here, the single HARQ feedback transmission opportunity may be indicated as a resource for HARQ feedback within a PSSCH. As described above, the sidelink DRX HARQ RTT timer may operate based on the resource for the HARQ feedback within the PSSCH.

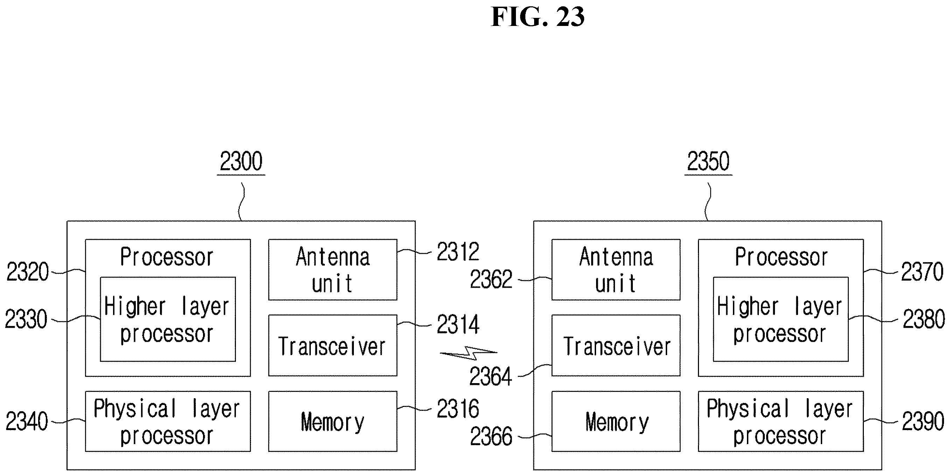

FIG. 23 is a diagram illustrating a base station and a terminal device to which the present disclosure may apply.

A base station 2300 may include a processor 2320, an antenna unit 2312, a transceiver 2314, and a memory 2316.

The processor 2320 may perform baseband-related signal processing, and may include a higher layer processor 2330 and a physical layer processor 2340. The higher layer processor 2330 may perform the operation of a medium access control (MAC) layer, a radio resource control (RRC) layer, or a higher layer thereof. The physical layer processor 2340 may process the operation of a physical (PHY) layer (e.g., uplink received signal processing, downlink transmission signal processing). The processor 2320 may also control the overall operation of the base station 2300, in addition to performing baseband-related signal processing.

The antenna unit 2312 may include at least one physical antenna, and may support multiple input multiple output (MIMO) transmission and reception in the case of including a plurality of antennas. Also, the antenna unit 2312 may support beamforming.

The memory 2316 may store computationally processed information of the processor 2320, and software, operating systems, applications, and the like related to the operation of the base station 2300, and may also include components, such as a buffer.

The processor 2320 of the base station 2300 may be configured to implement the operation of a base station in the embodiments described herein.

A terminal device 2350 may include a processor 2370, an antenna unit 2362, a transceiver 2364, and a memory 2366. For example, herein, the terminal device 2350 may perform communication with the base station 2300. As another example, herein, the terminal device 2350 may perform sidelink communication with another terminal device. That is, the terminal device 2350 of the present invention refers to a device capable of communicating with at least one of the base station 2300 and the other terminal device, and is not limited to communication with a specific device.

The processor 2370 may perform baseband-related signal processing, and may include a higher layer processor 2380 and a physical layer processor 2390. The higher layer processor 2380 may process the operation of the MAC layer, the RRC layer, or the higher layer thereof. The physical layer processor 2390 may process the operation of the PHY layer (e.g., downlink received signal processing, uplink transmission signal processing). In addition to performing baseband-related signal processing, the processor 2370 may control the overall operation of the terminal device 2350.

The antenna unit 2362 may include at least one physical antenna, and may support MIMO transmission and reception in the case of including a plurality of antennas. Also, the antenna unit 2362 may support beamforming.

The memory 2366 may store computationally processed information of the processor 2370, and software, operating systems, applications, and the like related to the operation of the terminal device 2350, and may also include components, such as a buffer.

The terminal device 2350 according to an example of the present invention may be associated with a vehicle. For example, the terminal device 2350 may be integrated in the vehicle, may be located in the vehicle, or may be located on the vehicle. Also, the terminal device 2350 according to the present invention may be the vehicle itself. Also, the terminal device 2350 according to the present disclosure may be at least one of a wearable terminal, AR/VR, an Internet of things (IoT) terminal, a robot terminal, and a public safety terminal. The terminal device 2350 to which the present disclosure may apply may include various types of communication devices that support an interactive service using sidelink, for services, for example, Internet access, service execution, navigation, real-time information, autonomous driving, and safety-and-risk diagnosis. Also, the terminal device 2350 may include an AR/VR device capable of performing a sidelink operation or any type of communication devices capable of performing a relay operation as a sensor.

Here, the vehicle to which the present invention applies may include an autonomous vehicle, a semi-autonomous vehicle, and a non-autonomous vehicle. Meanwhile, although the terminal device 2350 according to an example of the present invention is described in association with the vehicle, at least one of the UEs may not be associated with the vehicle. It is provided as an example only and should not be interpreted to limit application of the present invention.

Also, the terminal device 2350 according to an example of the present disclosure may include various types of communication devices capable of performing cooperation that supports an interactive service using sidelink. That is, the terminal device 2350 may directly support the interactive service using the sidelink and may be employed as a cooperation device for supporting the interactive service using the sidelink.

Also, for example, the terminal device 2350 may be configured with multiple HARQ feedback transmission opportunities or a single HARQ feedback transmission opportunity. The terminal device 2350 may transmit HARQ feedback based on the configured at least one HARQ feedback transmission opportunity. The terminal device 2350 may operate a sidelink DRX HARQ RTT timer based on the HARQ feedback transmission, and may receive a retransmission grant if the sidelink DRX HARQ RTT timer expires. Here, if the sidelink DRX HARQ RTT timer expires and data of a sidelink process is not successfully decoded or HARQ feedback information is NACK, the terminal device 2350 may receive the retransmission grant based on the sidelink DRX HARQ retransmission timer. Here, for example, the at least one HARQ feedback transmission opportunity may be configured to be plural based on at least one of semi-static PSFCH configuration and dynamic PSFCH resource indication. For example, the sidelink DRX HARQ RTT timer may be variably configured based on a HARQ feedback transmission opportunity that succeeds in a HARQ feedback transmission among the multiple HARQ feedback transmission opportunities. As another example, the sidelink DRX HARQ RTT timer may operate based on a specific HARQ feedback transmission opportunity among the multiple HARQ feedback transmission opportunities. Here, the specific HARQ feedback transmission opportunity may refer to a last HARQ feedback transmission opportunity among the multiple HARQ feedback transmission opportunities, but may not be limited thereto. As another example, the at least one HARQ feedback transmission opportunity may be a single HARQ feedback transmission opportunity. Here, the single HARQ feedback transmission opportunity may be indicated as a resource for HARQ feedback within the PSSCH. As described above, the sidelink DRX HARQ RTT timer may operate based on the resource for the HARQ feedback within the PSSCH.

Various embodiments of the present disclosure may be implemented by hardware, firmware, software, or combination thereof. In the case of implementation by hardware, the embodiments may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine executable instructions (for example, operating system, application, firmware, program, etc.) for implementing operations according to the methods of the various embodiments on a device or a computer, and a device or a non-transitory computer-readable medium executable on the device or the computer storing such software or instructions.

Various embodiments of the present disclosure are to explain representative aspect of the present disclosure rather than listing all possible combinations and description made in the various embodiments may be independently applied or may be applied in combination of two or more.

INDUSTRIAL APPLICABILITY

The above matters may apply to other systems.

**Claims**

1. A wireless user equipment, UE, that operates in a sidelink unlicensed band in a wireless communication system, the wireless UE comprising:

   at least one antenna configured to transmit and receive one or more wireless signals;
   at least one processor; and
   a memory configured to store instructions for the wireless UE when executed by the at least one processor, wherein the wireless UE is configured to,

   be configured with at least one hybrid automatic repeat and request, HARQ, feedback transmission opportunity,
   transmit HARQ feedback based on the configured at least one HARQ feedback transmission opportunity,

operate a sidelink discontinuous reception (DRX) HARQ round trip time, RTT, timer based on the HARQ feedback transmission, and
receive a retransmission grant if the sidelink DRX HARQ RTT timer expires.

2. The wireless UE of claim 1, wherein, if the sidelink DRX HARQ RTT timer expires and data of a sidelink process is not successfully decoded or HARQ feedback information is NACK, the wireless UE is configured to receive the retransmission grant based on a sidelink DRX HARQ retransmission timer.

3. The wireless UE of claim 1, wherein the at least one HARQ feedback transmission opportunity is configured to be plural based on at least one of semi-static physical sidelink feedback channel, PSFCH, configuration and dynamic PSFCH resource indication.

4. The wireless UE of claim 3, wherein the sidelink DRX HARQ RTT timer operates based on a HARQ feedback transmission opportunity that succeeds in a HARQ feedback transmission among the multiple HARQ feedback transmission opportunities.

5. The wireless UE of claim 3, wherein the sidelink DRX HARQ RTT timer operates based on a specific HARQ feedback transmission opportunity among the multiple HARQ feedback transmission opportunities.

6. The wireless UE of claim 1, wherein the at least one HARQ feedback transmission opportunity is configured as one.

7. The wireless UE of claim 6, wherein the one HARQ feedback transmission opportunity is indicated as a resource for HARQ feedback within a physical sidelink shared channel (PSSCH).

8. The wireless UE of claim 7, wherein the sidelink DRX HARQ RTT timer operates based on the resource for the HARQ feedback within the PSSCH.

# FIG. 1

Downlink frame $i$

Uplink frame $i$

$N_{TA} T_s$

# FIG. 2

One sub frame

$N_{\text{sub frame}}^{\text{symbols}\,\mu}$ OFDM symbols

$k = N_{RB}^{\mu}\,N_{sc}^{RB}\text{-}1$

Resource block

Resource element
-$(k,\bar{l})$ in resource grid
-$(k,l)$ in resource block

$N_{RB}^{\mu}\,N_{sc}^{RB}$ subcarriers

$N_{sc}^{RB}$ subcarriers

$k = 0$

$l = 0$

$\bar{l} = 14 \cdot 2^{\mu}\text{-}1$

# FIG. 3

**FIG. 4**

C-V2X

| V2V | Reserved | Reserved | Tolling | Control | I2V | PVD/Security |
|------|----------|----------|---------|---------|-----|--------------|
| CH 1 | CH 2 | CH 3 | CH 4 | CH 5 | CH 6 | CH 7 |

5,855    5,865    5,875    5,885    5,895    5,905    5,915    5,925 MHz

EP 4 611 450 A1

# FIG. 5

SL BWP

Excluded RB

Reserved slot

Excluded slot

SSB slot

sl-SubchannelSize

$10240 \times 2^{\mu}$

sl-TimeResource(length = $L_{bitmap}$)
(e.g.,0011111100)

Time(slots)

Frequency(RBs)

sl-RB-Number

sl-StartRBsubchannel

# FIG. 6

| | | | | | |
|---|---|---|---|---|---|
| Korea | 17 dBm / DFS, TPC | | 23 dBm DFS,TPC | | |
| China | DFS, TPC / DFS, TPC | | | 27 dBm | |
| Japan | LBT / DFS, TPC, LBT | | DFS,TPC,LBT | | |
| US | 30 dBm / DFS, TPC / (under study) | DFS,TPC | (under study) | (under study) | |
| EU | LST / DFS, TPC, LBT / (under study) | DFS,TPC,LBT | (under study) / ITS | (under study) | |

f(MHz)

5150  5250  5350  5470        5750  5825  5925                  6425                        7125

Indoor, typ.23 dBm

Indoor or outdoor, typically 30 dBm

6 GHz band, under study

EP 4 611 450 A1

# FIG. 7

EP 4 611 450 A1

| U-NII-1 (100 MHz) | U-NII-2A (100 MHz) | U-NII-2B (120 MHz) | U-NII-2C (255 MHz) | U-NII-3 (100 MHz) / Part 15.247 Rules (125 MHz) | 25 MHz | U-NII-4 (75 MHz) |
|---|---|---|---|---|---|---|

5.150 GHz    5.250 GHz    5.350 GHz    5.470 GHz                5.725 GHz        5.850 GHz   5.925 GHz

**FIG. 8**

# FIG. 9

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$$

$$RB_{s,x}^{end,\mu} = N_{grid,x}^{start,\mu} + \begin{cases} N_{grid,x}^{size,\mu} & s = N_{RB\text{-}set,x}-1 \\ GB_{s,x}^{start,\mu} & otherwise \end{cases}$$

$$N_{BWP,i}^{size,\mu} = RB_{s1,uplink}^{end,\mu} - RB_{s0,uplink}^{start,\mu}$$

$$N_{BWP,i}^{start,\mu} = RB_{s0,uplink}^{start,\mu}$$

EP 4 611 450 A1

# FIG. 10

# FIG. 11

sl-TimeResource (length = $L_{bitmap}$)
(e.g., 0011111100)

sl-TimeResource (length = $L_{bitmap}$)

Frequency (RBs)

sl-RB-Number

sl-StartRBsubchannel

sl-SubchannelSize

Time (slots)

$10240 \times 2^{\mu}$

| | | | |
|---|---|---|---|
| ▨ | SL BWP | ▨ | Reserved slot |
| ▨ | Excluded RB | ▨ | Excluded slot |
| ▨ | SSB slot | | |

# FIG. 12

SCI format 2-A/2-B
• HARQ feedback enabled/disabled indicator = 1

sl-PSFCH-Period = sl2(sl0, sl1, sl2, sl4)

sl-MinTimeGapPSFCH = sl2(sl2, sl3)

1240  1250

1    2         3         4    5

1210  1220                1230        sl-drx-HARQ-RTT-Timer

timeResourcePool = INTEGER (10~160) = 10 [0 1 1 0 0 1 0 0 1 1]

SL Slot w/ PSFCH

SL Slot w/o PSFCH

Uu Slot

# FIG. 13

1310

sl-drx-HARQ-RTT-Timer

# FIG. 14

# FIG. 15

EP 4 611 450 A1

# FIG. 16

# FIG. 17

# FIG. 18

EP 4 611 450 A1

## FIG. 19

SCI/Data

SCI Indicates PSFCH resource for HARQ Feedback

Associated PSFCH occasion with Slot n's PSSCH

sl-PSFCH-Period = sl2(sl0,sl1,sl2,sl4)

PSSCH PSCCH | PSFCH | PSSCH PSCCH | PSSCH PSCCH | PSFCH | PSSCH PSCCH | PSSCH PSCCH | PSFCH | PSSCH PSCCH | PSSCH PSCCH | PSFCH | PSSCH PSCCH | PSSCH PSCCH | PSFCH | PSSCH PSCCH | PSSCH PSCCH | PSFCH | PSSCH PSCCH

Slot n    sl-MinTimeGapPSFCH = 2    Slot n+4    1910    Slot n+8    1920    sl-drx-HARQ-RTT-Timer    sl-drx-Retansmission Timer

(a) Semi-static PSFCH configuration + dedicated PSFCH indication

SCI/Data

SCI Indicates PSSCH resource for HARQ Feedback

Associated PSFCH occasion with Slot n's PSSCH

sl-PSFCH-Period = sl2(sl0,sl1,sl2,sl4)

Slot n    sl-MinTimeGapPSFCH = 2    Slot n+4    1910    Slot n+6    1930    sl-drx-HARQ-RTT-Timer    sl-drx-Retansmission Timer

(b) Semi-static PSFCH configuration + dedicated PSSCH indication

SCI/Data

SCI Indicates PSSCH resource for HARQ Feedback

Associated PSFCH occasion with Slot n's PSSCH

sl-PSFCH-Period = sl2(sl0,sl1,sl2,sl4)

Slot n    sl-MinTimeGapPSFCH = 2    Slot n+3    1940    Slot n+4    1910    sl-drx-HARQ-RTT-Timer    sl-drx-Retansmission Timer

(c) Semi-static PSFCH configuration + dedicated PSSCH indication

# FIG. 20

SCI Indicates PSSCH resource for HARQ Feedback

SCI/Data

sl-PSFCH-Period = sl2(sl0,sl1,sl2,sl4)

2020

| PSSCH / PSCCH | P S F C H | PSSCH / PSCCH | PSSCH / PSCCH | P S F C H | PSSCH / PSCCH | PSSCH / PSCCH | P S F C H | PSSCH / PSCCH |

Slot n

sl-MinTimeGapPSFCH = 2

Slot n+3

2010

sl-drx-HARQ-RTT-Timer

sl-drx-Retansmission Timer

# FIG. 21

HARQ Feedback transmission
opportunity bundling

1$^{st}$ PSFCH occasion     2$^{nd}$ PSFCH occasion

sl-PSFCH-Period = sl2(sl0,sl1,sl2,sl4)

| PSSCH | PSFCH | PSSCH | PSSCH | PSFCH | PSSCH | PSSCH | PSFCH | PSSCH | PSSCH | PSFCH | PSSCH | PSSCH | PSFCH | PSSCH | PSSCH | PSFCH | PSSCH | PSSCH | PSFCH | PSSCH |

PSCCH

Slot n

sl-MinTimeGapPSFCH = 2

2110          2120

If PSFCH reception is absent on
both the 1$^{st}$ PSFCH occasion and
the 2$^{nd}$ PSFCH occasion, increment
numConsecutiveDTX by 1

# FIG. 22

Start

Configure at least one HARQ
feedback transmission opportunity — S2210

Transmit HARQ feedback transmission
based on configured at least one HARQ
feedback transmission opportunity — S2220

Operate sidelink DRX HARQ RTT timer based
on HARQ feedback transmission opportunity — S2230

Receive retransmission grant if
sidelink DRX HARQ RTT timer expires — S2240

End

**FIG. 23**

EP 4 611 450 A1

## INTERNATIONAL SEARCH REPORT

| International application No. |
| --- |
| **PCT/KR2023/016915** |

### A. CLASSIFICATION OF SUBJECT MATTER

**H04W 72/02**(2009.01)i; **H04W 72/20**(2023.01)i; **H04W 74/08**(2009.01)i; **H04W 16/14**(2009.01)i; **H04W 24/08**(2009.01)i; **H04W 76/28**(2018.01)i; **H04L 1/18**(2006.01)i; **H04W 52/02**(2009.01)i

According to International Patent Classification (IPC) or to both national classification and IPC

### B. FIELDS SEARCHED

Minimum documentation searched (classification system followed by classification symbols)

H04W 72/02(2009.01); H04L 1/18(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), HARQ, DRX, 타이머(timer)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2412491 B1 (KT CORPORATION) 27 June 2022 (2022-06-27) See paragraphs [0153]-[0179]; and claims 1, 4-6 and 9-10. | 1-3,6 |
| A | | 4-5,7-8 |
| Y | CATT. [AT113bis-e][707][V2X/SL] Uu DRX impact to support SL. R2-2104473, 3GPP TSG RAN WG2 Meeting #113bis-e. 23 April 2021. See section 2.2. | 1-3,6 |
| Y | 3GPP; TSG RAN; NR; NR and NG-RAN overall description; Stage 2(Release17). 3GPP TS 38.300 V17.2.0 (September 2022). 29 September 2022. See section 16.9.3.2. | 3 |
| A | OPPO. Summary of [AT119-e][511][V2X/SL] UP discussion(OPPO). R2-2208859, 3GPP TSG RAN WG2 Meeting #119-e. 03 September 2022. See section 3.1.2. | 1-8 |
| A | WO 2022-203413 A1 (LG ELECTRONICS INC.) 29 September 2022 (2022-09-29) See paragraphs [0161]-[0166]; and claims 1-20. | 1-8 |

☐ Further documents are listed in the continuation of Box C.      ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **30 January 2024** | **31 January 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/016915**

| Patent document cited in search report | | | Publication date (day/month/year) | Patent family member(s) | | | Publication date (day/month/year) |
|---|---|---|---|---|---|---|---|
| KR | 10-2412491 | B1 | 27 June 2022 | CN | 111756488 | A | 09 October 2020 |
| | | | | CN | 111756488 | B | 25 July 2023 |
| | | | | US | 11722255 | B2 | 08 August 2023 |
| | | | | US | 2020-0313805 | A1 | 01 October 2020 |
| | | | | US | 2023-0336279 | A1 | 19 October 2023 |
| WO | 2022-203413 | A1 | 29 September 2022 | EP | 4131823 | A1 | 08 February 2023 |
| | | | | KR | 10-2022-0159434 | A | 02 December 2022 |
| | | | | KR | 10-2544631 | B1 | 21 June 2023 |
| | | | | US | 11627591 | B2 | 11 April 2023 |
| | | | | US | 2022-0330283 | A1 | 13 October 2022 |
| | | | | US | 2023-0254843 | A1 | 10 August 2023 |

Form PCT/ISA/210 (patent family annex) (July 2022)